# EUROPEAN PATENT APPLICATION

(11) **EP 4 524 215 A1**
(43) Date of publication of application: **19.03.2025**
(21) Application number: 24756997.3
(22) Date of filing: 16.02.2024
(51) Int. Cl.: C09K 3/00, D21H 19/20, D21H 21/14

(54) **OILPROOFING AGENT**

(30) Priority: 17.02.2023 JP 2023023706
(71) Applicant: DAIKIN INDUSTRIES, LTD., Osaka-shi, Osaka 530-0001 (JP)
(72) Inventor: MATSUDA, Michio, Osaka-Shi, Osaka 530-0001 (JP); SAKASHITA, Hirotoshi, Osaka-Shi, Osaka 530-0001 (JP); SHIBATA, Shun, Osaka-Shi, Osaka 530-0001 (JP); UEHARA, Tetsuya, Osaka-Shi, Osaka 530-0001 (JP); NAKAMURA, Hisako, Osaka-Shi, Osaka 530-0001 (JP)
(74) Representative: Hoffmann Eitle
(86) International application number: PCT/JP2024/005577
(87) International publication number: WO 2024/172158

(57) **Abstract**

An oilproofing agent that contains (1) a hydrocarbon-containing polymer having a repeating unit derived from a monomer (a) having a C6-40 hydrocarbon group, (2) a water-soluble polymer, and (3) a polycarboxylic acid provides a novel oilproofing agent having an excellent oilproofing property.

## Description

### Technical Field

The present disclosure relates to an oil-resistant agent and the oil-resistant agent particularly suitable for treating fibers and paper.

### Background Art

In recent years, non-fluorine-based treatment agents capable of imparting liquid-repellency and liquid-resistance to various substrates have been developed.

### Citation List

### Patent Literature

[Patent Literature 1] JP2003-206409A

### Summary of Invention

### Technical Problem

Patent Literature 1 discloses a composition forming a film excellent in water resistance and the like on a substrate surface, characterized in that the composition is composed of a polymer having a hydroxyl group and/or an amino group and a polybasic acid as essential ingredients (provided that a combination of glycerylated chitosan and 1,2,3,4-butane tetracarboxylic acid is excluded).

Patent Literature 1 does not describe use of long-chain hydrocarbon group, such as those having 6 or more carbon atoms, nor does it describe oil-resistance.

The present disclosure is to provide a novel oil-resistant agent excellent in oil-resistance.

### Solution to Problem

Preferred aspects of the present disclosure are as follows:
[Item 1] An oil-resistant agent, comprising
   (1) a hydrocarbon-containing polymer having a repeating unit derived from a monomer (a) having a hydrocarbon group having 6 or more and 40 or less carbon atoms,
   (2) a water-soluble polymer, and
   (3) a polyvalent carboxylic acid.
[Item 2] The oil-resistant agent according to the item 1, wherein the water-soluble polymer (2) is a polyol.
[Item 3] The oil-resistant agent according to the item 1 or 2, wherein the water-soluble polymer (2) is at least one selected from the group consisting of a polysaccharide and a polyvinyl alcohol.
[Item 4] The oil-resistant agent according to any one of the items 1 to 3, wherein the polyvalent carboxylic acid has a molecular weight of 1,000 or less.
[Item 5] The oil-resistant agent according to any one of the items 1 to 4, wherein the polyvalent carboxylic acid is a hydroxy polyvalent carboxylic acid.
[Item 6] The oil-resistant agent according to any one of the items 1 to 5, wherein the polyvalent carboxylic acid is at least one selected from the group consisting of citric acid, malic acid, tartaric acid, and tartronic acid.
[Item 7] The oil-resistant agent according to any one of the items 1 to 6, wherein the monomer (a) has a hydrocarbon group having 12 or more and 30 or less carbon atoms.
[Item 8] The oil-resistant agent according to any one of the items 1 to 7, wherein the monomer (a) is represented by formula:

   CH₂=C(-X^{a})-C(=O)-Y^{a}(R^{a})ₖ

   wherein R^{a} is each independently a hydrocarbon group having 6 to 40 carbon atoms,
   X^{a} is a hydrogen atom, a monovalent organic group or a halogen atom,
   Y^{a} is a group composed of at least one selected from a divalent to trivalent hydrocarbon group having 1 carbon atom (in particular - CH₂, -CH=), -C₆H₄-, -O-, -C(=O)-, -S(=O)₂- or -NH-, provided that a hydrocarbon group is excluded, and
   k is 1 to 3.
[Item 9] The oil-resistant agent according to any one of the items 1 to 8, wherein the monomer (a) comprises a monomer (a2), and the monomer (a2) is represented by formula:

   CH₂=C(-X^{a2})-C(=O)-Y^{a21}-Z(-Y^{a22}-R^{a2})ₙ

   wherein R^{a2} is each independently a hydrocarbon group having 6 to 40 carbon atoms,
   X^{a2} is a hydrogen atom, a monovalent organic group or a halogen atom,
   Y^{a21} is -O- or -NH-,
   Y^{a22} is each independently a group composed of at least one selected from -O-, -C(=O)-, -S(=O)₂-, -NH-, or -CH₂-,
   Z is a divalent or trivalent hydrocarbon group having 1 to 5 carbon atoms, and
   n is 1 or 2.
[Item 10] The oil-resistant agent according to any one of the items 1 to 9, wherein the hydrocarbon-containing polymer (1) comprises a repeating unit derived from
   (b) a hydrophilic group-containing monomer, and the monomer (b) is an oxyalkylene (meth)acrylate represented by formula:

   CH₂=CX^{b}C(=O)-Y^{b}-(R^{b}O)ₙ-A^{b}

   wherein
   X^{b} is a hydrogen atom or a methyl group,
   Y^{b} is -O- or -NH-,
   R^{b} is each independently an alkylene group having 2 to 6 carbon atoms,
   A^{b} is a hydrogen atom, an unsaturated or saturated hydrocarbon group having 1 to 22 carbon atoms, or CH₂=CX^{b}C(=O)-, and n is an integer of 1 to 90.
[Item 11] The oil-resistant agent according to any one of the items 1 to 10, wherein the hydrocarbon-containing polymer (1) comprises
   (c) an ion-donating group-containing monomer, and
   the monomer (c) comprises an olefinic carbon-carbon double bond and an anionic donor group or a cationic-donor group.
[Item 12] A product treated with the oil-resistant agent according to any one of the items 1 to 11.
[Item 13] The product according to the item 12, wherein the product is a textile product or a paper product.
[Item 14] The product according to the item 12 or 13, wherein the product is oil-resistant paper or water-resistant paper.
[Item 15] The product according to any one of the items 12 to 14, wherein the product is a food packaging material or a food container.

### Advantageous Effects of Invention

The oil-resistant agent in the present disclosure is excellent in oil-resistance. The oil-resistant agent in the present disclosure has favorable oil-resistance. The oil-resistant agent in the present disclosure can improve oil staining from a fold.

### Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group having one or more N, O, S, Si, amides, sulfonyls, siloxanes, carbonyls, carbonyl oxies, halogens, or the like at the end of the hydrocarbon group or in the molecular chain.

As used herein, the "hydrocarbon group" refers to a group containing carbon and hydrogen and a group in which a hydrogen atom is removed from the hydrocarbon. Such hydrocarbon groups are not limited, but include C₁₋₂₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures. The hydrocarbon group may be substituted by one or more substituents when explicitly described.

Whether or not the phrase "independently at each occurrence," "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Oil-resistant agent>

The oil-resistant agent in the present disclosure imparts oil-resistance to substrates (for example, a fiber substrate and paper substrate). The oil-resistant agent can also function as at least one selected from the group consisting of a water-repellent agent, an oil-repellent agent, and a water-resistant agent. Use of the oil-resistant agent in the present disclosure can impart oil-resistance without excessively increasing the air resistance value of treated paper, making it useful for applications requiring air permeability (for example, food wrapping paper for packing chicken, potatoes, and the like, which have been cooked in oil, freshness retaining sheets, and the like).

The oil-resistant agent in the present disclosure includes
(1) a hydrocarbon-containing polymer,
(2) a water-soluble polymer, and
(3) a polyvalent carboxylic acid.

The oil-resistance agent in the present disclosure may be free of any selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The oil-resistant agent in the present disclosure can impart oil-resistance to a substrate even though the agent is free of these fluorine compounds.

### {(1) Hydrocarbon-containing polymer}

The hydrocarbon-containing polymer (1) has a monovalent hydrocarbon group having 6 or more and 40 or less carbon atoms. The hydrocarbon group may be an aromatic hydrocarbon group or an aliphatic hydrocarbon group, and is preferably an aliphatic hydrocarbon group, particularly a saturated aliphatic hydrocarbon group (alkyl group). The hydrocarbon group is a branched chain or linear chain and more preferably a linear chain. The hydrocarbon group may be saturated or unsaturated. The hydrocarbon group is preferably a saturated aliphatic hydrocarbon group (alkyl group). The number of carbon atoms in the hydrocarbon group may be 6 or more, 7 or more, 8 or more, 10 or more, 12 or more, 14 or more, 16 or more, 18 or more, 20 or more, or 22 or more, and is preferably 10 or more, 12 or more, or 16 or more, and it may be 40 or less, 35 or less, 30 or less, 25 or less, 20 or less, 15 or less, or 10 or less and is preferably 30 or less, 25 or less, or 20 or less.

An HD (n-hexadecane) contact angle of the hydrocarbon-containing polymer (1) may be 10° or more, 15° or more, 25° or more, 35° or more, 55° or more, 55° or more, or 65°or more and is preferably 30° or more, and may be 100° or less, 90°or less, or 75°or less. The hydrocarbon-containing polymer (1) having an HD contact angle of the above lower limit or more can impart favorable liquid-repellency (in particular oil-repellency · oil-resistance) to a substrate. The HD contact angle is a static contact angle of the hydrocarbon-containing polymer (1) to a spin-coated film, as shown in Example, and is obtained by dropping 2 µL of HD onto the spin-coated film and measuring a contact angle one second after the drop.

A water contact angle of the hydrocarbon-containing polymer (1) may be 35° or more, 40° or more, 45° or more, 50° or more, 55° or more, or 65°or more, 75° or more, 85° or more, 90° or more, or 100°or more, and may be 160° or less, 140°or less, or 130°or less, 120° or less, 110°or less, or 100°or less, or 90°or less. The hydrocarbon-containing polymer (1) having a water contact angle of the above lower limit or more can impart favorable liquid-repellency (particularly water-repellency · water-resistance) to a substrate. The water contact angle is a static contact angle of the hydrocarbon-containing polymer (1) to a spin-coated film, as shown in Example, and is obtained by dropping 2 µL of water onto the spin-coated film and measuring a contact angle one second after the drop.

The hydrocarbon-containing polymer (1) is preferably a compound with carbon of biobased origin. A biobased content is measured in accordance with ASTM D6866. The biobased content is preferably 20% or more, more preferably 30% or more, further preferably 50% or more, further preferably 60% or more, further preferably 70% or more, and most preferably 80% or more or 90% or more, and for example, it is 100%. The high biobased content refers to less amount of fossil resource-based material used, which is represented by petroleum and the like, and from this perspective, it can be said that the higher the biobased content of hydrocarbon-containing polymer (1), the more preferable it is.

The hydrocarbon-containing polymer (1) in the present disclosure may be free of any selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The hydrocarbon-containing polymer (1) can impart oil-resistance to a substrate, even though the polymer is free of these fluorine-containing groups.

The weight-average molecular weight of the hydrocarbon-containing polymer (1) may be 3,000 or more, 5,000 or more, 10,000 or more, 30,000 or more, 100,000 or more, 300,000 or more, or 500,000 or more, and may also be 1,000,000 or less, 750,000 or less, 500,000 or less, 300,000 or less, 100,000 or less, 75,000 or less, 50,000 or less, 30,000 or less, 10,000 or less, or 5,000 or less.

The melting point or glass transition point (for example, melting point) of the hydrocarbon-containing polymer (1) is 20°C or higher, 30°C or higher, 35°C or higher, 40°C or higher, 45°C or higher, 50°C or higher, or 55°C or higher, and may also be 200°C or lower, 150°C or lower, 100°C or lower, 80°C or lower, or 70°C or lower.

The hydrocarbon-containing polymer (1) has a repeating unit derived from a monomer (a) having a hydrocarbon group having 6 or more and 40 or less carbon atoms. The hydrocarbon-containing polymer may have, in addition to a repeating unit derived from the monomer (a), repeating units derived from (b) a monomer having a hydrophilic group, (c) an ion-donating group-containing monomer, and/or (d) other monomer. In particular, the hydrocarbon-containing polymer (1) preferably has a repeating unit formed of (b) the monomer having a hydrophilic group. Furthermore, the hydrocarbon-containing polymer (1) preferably has a repeating unit formed of (c) the ion-donating group-containing monomer in addition to repeating units of the monomers (a) and (b). The hydrocarbon-containing polymer (1) preferably has a repeating unit formed of (d) the other monomer in addition to repeating units of the monomers (a), (b), and (c).

### [(a) Hydrocarbon group-containing monomer]

The hydrocarbon-containing polymer (1) has a repeating unit derived from the monomer (a) having a hydrocarbon group having 6 or more and 40 or less carbon atoms. The monomer (a) may be a monomer.

A hydrocarbon group that the monomer (a) has may be an aromatic hydrocarbon group or an aliphatic hydrocarbon group, and is preferably an aliphatic hydrocarbon group, particularly a saturated aliphatic hydrocarbon group (alkyl group). The hydrocarbon group is a branched chain or linear chain and more preferably a linear chain. The hydrocarbon group may be saturated or unsaturated. The hydrocarbon group is preferably a saturated aliphatic hydrocarbon group (alkyl group). The number of carbon atoms in the hydrocarbon group may be 6 or more, 8 or more, 10 or more, 12 or more, 14 or more, 16 or more, 18 or more, 20 or more, or 22 or more, and is preferably 10 or more, 12 or more, 14 or more, or 16 or more, and it may be 40 or less, 35 or less, 30 or less, 25 or less, 20 or less, 15 or less, or 10 or less and is preferably 30 or less, 25 or less, or 20 or less.

The monomer (a) may contain an amide group, a urea group, or a urethane group. The hydrocarbon-based monomer may be a combination of a hydrocarbon-based monomer having an amide group, urea group, or urethane group and a hydrocarbon-based monomer free of an amide group, urea group, or urethane group. The monomer (a) including such a group enables the effects of the present disclosure to be favorably exhibited.

The monomer (a) having a hydrocarbon group having 6 or more and 40 or less carbon atoms is preferably the monomer represented by
formula:

CH₂=C(-X^{a})-C(=O)-Y^{a}(R^{a})ₖ

[wherein R^{a} is each independently a hydrocarbon group having 6 to 40 carbon atoms,
X^{a} is a hydrogen atom, a monovalent organic group or a halogen atom,
Y^{a} is a group composed of at least one selected from a divalent to trivalent hydrocarbon group having 1 carbon atom (in particular -CH₂ and -CH=), -C₆H₄-, -O-, -C(=O)-, -S(=O)₂- or -NH- (provided that a hydrocarbon group is excluded), and
   k is 1 to 3.].

X^{a} may be a hydrogen atom, a methyl group, a halogen other than a fluorine atom, a substituted or unsubstituted benzyl group, or a substituted or unsubstituted phenyl group. Examples of X^{a} are a hydrogen atom, a methyl group, a chlorine atom, a bromine atom, an iodine atom, and a cyano group. X^{a} is preferably a hydrogen atom, a methyl group, or a chlorine atom. X^{a} is particularly preferably a hydrogen atom.

Y^{a} is a divalent to tetravalent group. Y^{a} is preferably a divalent group.

Y^{a} is preferably a group composed of at least one selected from a hydrocarbon group having 1 carbon atom, -C₆H₄-, -O-, -C(=O)-, -S(=O)₂-, or -NH- (provided that a hydrocarbon group is excluded). Examples of the hydrocarbon group having 1 carbon atom include - CH₂-, -CH= having a branched structure, or -C≡ having a branched structure.

Y^{a} may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, - Y'-R'-Y'-C(=O)-Y'-, or -Y'-R'-Y'-R'-,
[wherein Y' is a direct bond, -O-, -NH- or -S(=O)₂- and R' is -(CH₂)ₘ- (m is an integer of 1 to 5) or -C₆H₄- (phenylene group).].

Examples of Y^{a} is -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, - O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, - NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, - NH- (CH₂)ₘ-NH-S(=O) ₂-, or -NH-(CH₂)ₘ-S(=O)₂-NH- [wherein m is 1 to 5, particularly 2 or 4.].

Y^{a} is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, -O-(CH₂)ₘ-S(=O)₂-NH-, -NH-(CH₂)ₘ-NH-S(=O)₂-, or -NH-(CH₂)ₘ-S(=O)₂-NH-[wherein m is 1 to 5, particularly 2 or 4.].
Y^{a} is more preferably -O- or -O-(CH₂)ₘ-NH-C(=O)- and particularly preferably -O-(CH₂)ₘ-NH-C(=O)-.

R^{a} is preferably a linear or branched hydrocarbon group. The hydrocarbon group may particularly be a linear hydrocarbon group. The hydrocarbon group is preferably an aliphatic hydrocarbon group, particularly a saturated aliphatic hydrocarbon group, and in particular an alkyl group. The number of carbon atoms in the hydrocarbon group is preferably 12 to 30, for example 16 to 26 or 15 to 26, and in particular 18 to 22 or 17 to 22.

Examples of the monomer (a) are the monomer represented by formula (a1):

CH₂=C(-X^{a1})-C(=O)-Y^{a1}-R^{a1}

[wherein R^{a1} is a hydrocarbon group having 6 to 40 carbon atoms,
X^{a1} is a hydrogen atom, a monovalent organic group or a halogen atom,
Y^{a1} is -O- or -NH-.], and
   the monomer represented by
   formula (a2):

      CH₂=C(-X^{a2})-C(=O)-Y^{a21}-Z(-Y^{a22}-R^{a2})ₙ
   [wherein R^{a2} is each independently a hydrocarbon group having 6 to 40 carbon atoms,
X^{a2} is a hydrogen atom, a monovalent organic group or a halogen atom,
Y^{a21} is -O- or -NH-,
Y^{a22} is each independently a direct bond, or a group composed of at least one selected from -O-, -C(=O)-, -S(=O)₂-, -NH-, or - CH₂-,
Z is a direct bond, a divalent or trivalent hydrocarbon group having 1 to 5 carbon atoms, and
n is 1 or 2.].

### ((a1) monomer)

The (a1) monomer is the compound represented by formula:

CH₂=C(-X^{a1})-C(=O)-Y^{a1}-R^{a1}

[wherein R^{a1} is a hydrocarbon group having 6 to 40 carbon atoms,
X^{a1} is a hydrogen atom, a monovalent organic group or a halogen atom, and
Y^{a1} is -O- or -NH-.].

The monomer (a1) is a long chain acrylate ester monomer in which Y^{a1} is -O-, or a long chain acrylamide monomer in which Y^{a1} is -NH-.

R^{a1} is preferably an aliphatic hydrocarbon group, particularly a saturated aliphatic hydrocarbon group, and in particular an alkyl group. In R^{a1}, the number of carbon atoms in the hydrocarbon group is preferably 12 to 30, for example 16 to 26, and in particular 18 to 22.

X^{a1} may be a hydrogen atom, a methyl group, a halogen other than a fluorine atom, a substituted or unsubstituted benzyl group, or a substituted or unsubstituted phenyl group. X^{a1} is preferably a hydrogen atom, a methyl group or a chlorine atom.

Preferred specific examples of the long chain acrylate ester monomer are lauryl (meth)acrylate, stearyl (meth)acrylate, icosyl (meth)acrylate, behenyl (meth)acrylate, stearyl α chloroacrylate, icosyl α chloroacrylate, behenyl α chloroacrylate.

Preferred specific examples of the long chain acrylamide monomer are stearyl (meth)acrylamide, icosyl (meth)acrylamide, and behenyl (meth)acrylamide.

### ((a2) monomer)

The (a2) monomer is a monomer different from the monomer (a1). The monomer (a2) is (meth)acrylate or (meth)acrylamide having a group composed of at least one selected from -O-, -C(=O)-, -S(=O)₂-, -NH-, or -CH₂-.

The monomer (a2) may be the compound represented by formula:

CH₂=C(-X^{a2})-C(=O)-Y^{a21}-Z(-Y^{a22}-R^{a2})ₙ

[wherein R^{a2} is each independently a hydrocarbon group having 6 to 40 carbon atoms,
X^{a2} is a hydrogen atom, a monovalent organic group or a halogen atom,
Y^{a21} is -O- or -NH-,
Y^{a22} is each independently a direct bond or a group composed of at least one selected from -O-, -C(=O)-, -S(=O)₂-, -NH-, or - CH₂-,
Z is a direct bond, a divalent or trivalent hydrocarbon group having 1 to 5 carbon atoms, and
n is 1 or 2.].
Y^{a22} and/or Z may not be a direct bond. For example, Y^{a22} and Z may not be simultaneously a direct bond.

It is preferable that R^{a2} is an aliphatic hydrocarbon group, particularly a saturated aliphatic hydrocarbon group, and especially an alkyl group. In R^{a2}, the number of carbon atoms in the hydrocarbon group is preferably 12 to 30, for example 16 to 26 or 15 to 26 and particularly 18 to 22 or 17 to 22.

X^{a2} may be a hydrogen atom, a methyl group, a halogen other than a fluorine atom, a substituted or unsubstituted benzyl group, or a substituted or unsubstituted phenyl group. X^{a2} is preferably a hydrogen atom, a methyl group or a chlorine atom.

Y^{a22} may be -Y'-, -Y'-Y'-, -Y'-C(=O)-, -C(=O)-Y'-, -Y'-C(=O)-Y'-, -Y'-R'-, -Y'-R'-Y'-, -Y'-R'-Y'-C(=O)-, -Y'-R'-C(=O)-Y'-, - Y'-R'-Y'-C(=O)-Y'-, or -Y'-R'-Y'-R'-
[wherein Y' is each independently a direct bond, -O-, -NH- or - S(=O)₂-,
R' is -(CH₂)ₘ- (m is an integer of 1 to 5), a linear hydrocarbon group having an unsaturated bond having 1 to 5 carbon atoms, a hydrocarbon group with a branched structure, having 1 to 5 carbon atoms, or -(CH₂)₁-C₆H₄-(CH₂)₁- (1 is each independently an integer of 0 to 5, and -C₆H₄- is a phenylene group).].

Specific examples of Y^{a22} are a direct bond, -O-, -NH-, -O-C(=O)-, -C(=O)-O-, -C (=O) -NH-, -NH-C (=O) -, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, - NH-(CH₂)ₘ-O-C₆H₄-, and -NH-(CH₂)ₘ-NH-C₆H₄-
[wherein m is an integer of 1 to 5.].

Y^{a22} is preferably -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, or -O-C₆H₄-. Y^{a22} is further preferably - NH-C(=O)-, -C(=O)-NH-, -O-C(=O)-NH-, -NH-C(=O)-O- or -NH-C(=O)-NH-. For example, Y^{a22} may not be a direct bond.

Z is a direct bond or a divalent or trivalent hydrocarbon group having 1 to 5 carbon atoms, and for example, it may have a linear structure or a branched structure. The number of carbon atoms of Z is preferably 2 to 4 and in particular 2. Specific examples of Z are a direct bond, -CH₂-, -CH₂CH₂-, -CH₂CH₂CH₂-, - CH₂CH₂CH₂CH₂-, -CH₂CH₂CH₂CH₂CH₂-, -CH₂CH= having a branched structure, -CH₂(CH-)CH₂- having a branched structure, -CH₂CH₂CH= having a branched structure, -CH₂CH₂CH₂CH₂CH= having a branched structure, - CH₂CH₂ (CH-)CH₂- having a branched structure, and -CH₂CH₂CH₂CH= having a branched structure. For example, Z may not be a direct bond.

The monomer (a2) is preferably CH₂=C(-X^{a2})-C(=O)-O- (CH₂)ₘ-NH-C(=O)-R^{a2}, CH₂=C(-X^{a2})-C(=O)-O-(CH₂)ₘ-O-C(=O)-NH-R^{a2}, CH₂=C(-X^{a2})-C(=O)-O-(CH₂)ₘ-NH-C(=O)-O-R^{a2}, or CH₂=C(-X^{a2})-C(=O)-O-(CH₂)ₘ-NH-C (=O)-NH-R^{a2} [herein, R^{a2} and X^{a2} are the same as described above.].

The monomer (a2) is particularly preferably CH₂=C(-X^{a2})-C(=O)-O-(CH₂)ₘ-NH-C(=O)-R^{a2}.

The monomer (a2) can be produced by reacting a hydroxyalkyl (meth)acrylate or a hydroxyalkyl (meth)acrylamide with a long-chain alkyl isocyanate. The long-chain alkyl isocyanate includes, for example, lauryl isocyanate, myristyl isocyanate, cetyl isocyanate, stearyl isocyanate, oleyl isocyanate, and behenyl isocyanate.

Alternatively, the monomer (a2) can also be produced by reacting (meth)acrylate having an isocyanate group in its side chain, such as 2-methacryloyloxyethyl methacrylate, with a long-chain alkylamine or a long-chain alkyl alcohol. Example of the long-chain alkylamine includes laurylamine, myristylamine, cetylamine, stearylamine, oleylamine, and behenylamine. Example of the long-chain alkyl alcohol includes lauryl alcohol, myristyl alcohol, cetyl alcohol, stearyl alcohol, oleyl alcohol, and behenyl alcohol.

Preferred examples of the monomer (a) are as follows.

Stearyl (meth)acrylate, behenyl (meth)acrylate, stearyl α chloroacrylate, and behenyl α chloroacrylate;
stearyl (meth)acrylamide and behenyl (meth)acrylamide; 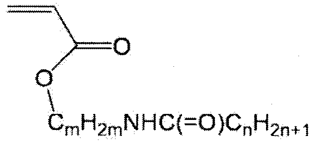 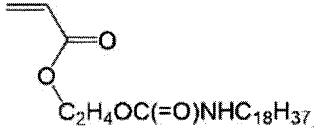 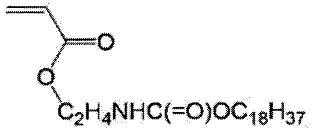 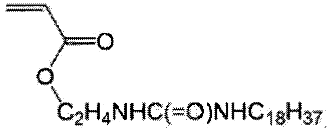 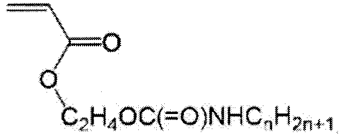 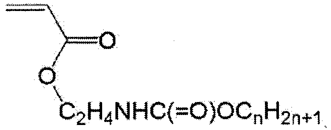 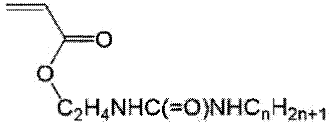 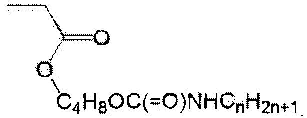 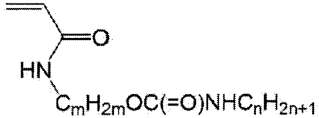 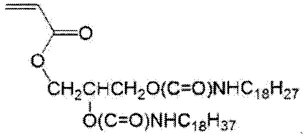 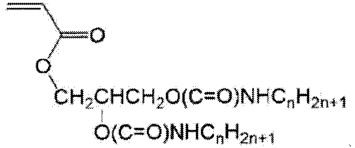 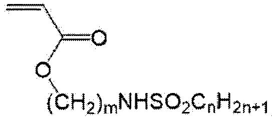 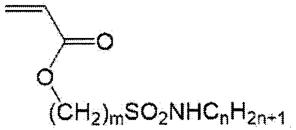 [wherein in formula above, n is a numeral of 6 to 40 and m is a numeral of 1 to 5.].

The compound with the chemical formula above is an acrylic compound in which the α-position is a hydrogen atom, but specific examples thereof may be a methacryl compound in which the α-position is a methyl group, and an α-chloroacrylic compound in which the α-position is a chlorine atom.

The monomer (a2) is preferably the amide group-containing monomer represented by formula:

R^{a22}-C(=O)-NH-R^{a23}-O-R^{a21}

[wherein R^{a21} is an organic residue having an ethylenically unsaturated polymerizable group,
R^{a22} is a hydrocarbon group having 6 to 40 carbon atoms, and
R^{a23} is a hydrocarbon group having 1 to 5 carbon atoms.].

R^{a21} is an organic residue having an ethylenically unsaturated polymerizable group, and is not particularly limited as long as it has a carbon-carbon double bond. Specific examples thereof include organic residues having ethylenically unsaturated polymerizable groups such as -C(=O)CR^{a211}=CH₂, -CHR^{a211}=CH₂, and -CH₂CHR^{a211}=CH₂, and an example of R^{a211} includes a hydrogen atom or an alkyl group having 1 to 4 carbon atoms. R^{a21} may also have various organic groups in addition to the ethylenically unsaturated polymerizable group, and examples of R^{a21} include, for example, organic groups such as a chain hydrocarbon, a cyclic hydrocarbon, a polyoxyalkylene group, and a polysiloxane group, and for example, these organic groups may be substituted with various substituents. R^{a21} is preferably -C(=O)CR^{a211}=CH₂.

R^{a22} is a hydrocarbon group having 6 or more and 40 or less carbon atoms, preferably an alkyl group, and examples of R^{a22} include a chain hydrocarbon group and a cyclic hydrocarbon group. Among these, a chain hydrocarbon group is preferred, and a linear saturated hydrocarbon group is particularly preferred. The number of carbon atoms of R^{a22} is 6 or more and 40 or less, preferably 11 to 27 and particularly preferably 15 to 23.

R^{a23} is a hydrocarbon group having 1 to 5 carbon atoms, preferably an alkyl group. The hydrocarbon group having 1 to 5 carbon atoms may be linear or branched, and may have an unsaturated bond, but is preferably linear. The number of carbon atoms in R^{a23} is preferably 2 to 4, particularly preferably 2. R^{a23} is preferably an alkylene group.

The amide group-containing monomer may be a compound in which R^{a22} is of one type (for example, a single compound in which R^{a22} has 17 carbon atoms), or a compound in which R^{a22} are a plurality of combinations (for example, a mixture of a compound in which R^{a22} has 17 carbon atoms and a compound in which R^{a22} has 15 carbon atoms).

An example of the amide group-containing monomer is a carboxylic acid amide alkyl (meth)acrylate.

Specific examples of the amide group-containing monomer include include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, tert-butylcyclohexyl caproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether, and a mixture thereof.

The amide group-containing monomer is preferably stearic acid amide ethyl (meth)acrylate. The amide group-containing monomer may be a mixture containing stearic acid amide ethyl (meth) acrylate. In the mixture containing stearic acid amide ethyl (meth)acrylate, the amount of stearic acid amide ethyl (meth)acrylate may be, for example, 40% by weight or more, 50% by weight or more, 60% by weight or more, and 70% by weight or more, and may be 90% by weight or less, 80% by weight or less, or 70% by weight or less, based on the total weight of the amide group-containing monomer. The rest of the monomers may be, for example, palmitic acid amide ethyl (meth)acrylate.

Among the monomers (a), the amount of monomer (a2) may be 10% by weight or more, 20% by weight or more, 30% by weight or more, 40% by weight or more, 50% by weight or more, 60% by weight or more, 70% by weight or more, or 80% by weight or more, and is preferably 30% by weight or more.

### [(b) Hydrophilic group-containing monomer]

The hydrocarbon-containing polymer (1) may also contain a hydrophilic group-containing monomer (b). The monomer (b) is a monomer other than the monomer (a), and is a monomer having a hydrophilic group. The hydrophilic group is preferably an oxyalkylene group (the alkylene group has 2 to 6 carbon atoms.) and particularly preferably an oxyethylene group. In particular, the monomer (b) is preferably oxyalkylene (meth)acrylates, such as a polyalkylene (or monoalkylene) glycol mono (meth)acrylate and/or a polyalkylene (or monoalkylene) glycol di(meth)acrylate, and a polyalkylene (or monoalkylene) glycol mono(meth)acrylamide.

The monomer (b) is preferably the oxyalkylene (meth)acrylate represented by formula:

CH₂=CX^{b}C(=O)-Y^{b}-(R^{b}O)ₙ-A^{b}

[wherein
X^{b} is a hydrogen atom or a methyl group,
Y^{b} is -O- or -NH-,
R^{b} is each independently an alkylene group having 2 to 6 carbon atoms,
A^{b} is a hydrogen atom, an unsaturated or saturated hydrocarbon group having 1 to 22 carbon atoms, or CH₂=CX^{b}C(=O)-, and n is an integer of 1 to 90.].

Examples of the monomer (b) is preferably the monomer represented by formula:

CH₂=CX^{b}C(=O)-O-(R^{b}O)ₙ-A^{bi} (b1)

and

CH₂=CX^{b}C(=O)-O-(R^{b}O)ₙ-C(=O)CX^{b}=CH₂ (b2),

and

CH₂=CX^{b}C(=O)-NH-(R^{b}O)ₙ-A^{bi} (b3)

[wherein
X^{b} is each independently a hydrogen atom or a methyl group,
A^{bi} is each independently a hydrogen atom, an unsaturated or saturated hydrocarbon group having 1 to 22 carbon atoms,
R^{b} is each independently an alkylene group having 2 to 6 carbon atoms, and
n is an integer of 1 to 90.].

n may be, for example, 1 to 50, in particular 1 to 30, and it may be especially 1 to 15 or 2 to 15. Alternatively, n may be, for example, 1.

R^{b} may be a linear or branched alkylene group, for example, the group represented by formula -(CH₂)ₓ- or -(CH₂)ₓ₁-(CH(CH₃))ₓ₂-[wherein x1 and x2 are 0 to 6, for example, 2 to 5, and the sum of x1 and x2 is 1 to 6. The order of -(CH₂)ₓ₁- and - (CH(CH₃))ₓ₂- is not limited to that of the described formulae and may be random.].

In -(R^{b}O)ₙ-, R may be of two or more types (for example, 2 to 4 types, particularly 2 types), and -(R^{b}O)ₙ- may be a combination of, for example, -(R¹O)ₙ₁- and -(R²O)ₙ₂- [wherein R¹ and R² are different from each other and are alkylene groups having 2 to 6 carbon atoms, n1 and n2 are numerals of 1 or greater, and the total of n1 and n2 is 2 to 90.].

R^{b} in formulae (b1), (b2) and (b3) is particularly preferably an ethylene group, a propylene group or a butylene group and in particular a butylene group. R^{b} in formulae (b1), (b2) and (b3) may also be a combination of two or more types of alkylene groups. In that case, at least one of R is preferably an ethylene group, a propylene group, or a butylene group. Examples of the combination of R^{b} include a combination of ethylene group/propylene group, a combination of ethylene group/butylene group, and a combination of propylene group/butylene group. The monomer (b) may be a mixture of two or more types. In this case, at least one of the monomer (b) is preferably a monomer in which R^{b} in formula (b1), (b2) or (b3) is an ethylene group, a propylene group, or a butylene group. When using the polyalkylene glycol di(meth)acrylate represented by formula (b2), it is not preferably used as the monomer (b) singly, and is preferably combined for use with the monomer (b1). In that case as well, the amount of the compound represented by formula (b2) preferably stays in less than 30% by weight in the monomer (b) used.

Specific examples of the monomer (b) can include, but are not limited to, the following.

CH₂=CHCOO-CH₂CH₂O-H

CH₂=CHCOO-CH₂CH₂CH₂O-H

CH₂=CHCOO-CH₂CH(CH₃)O-H

CH₂=CHCOO-CH(CH₃)CH₂O-H

CH₂=CHCOO-CH₂CH₂CH₂CH₂O-H

CH₂=CHCOO-CH₂CH₂CH(CH₃)O-H

CH₂=CHCOO-CH₂CH(CH₃)CH₂O-H

CH₂=CHCOO-CH(CH₃)CH₂CH₂O-H

CH₂=CHCOO-CH₂CH(CH₂CH₃)O-H

CH₂=CHCOO-CH₂C(CH₃)₂O-H

CH₂=CHCOO-CH(CH₂CH₃)CH₂O-H

CH₂=CHCOO-C(CH₃)₂CH₂O-H

CH₂=CHCOO-CH(CH₃)CH (CH₃)O-H

CH₂=CHCOO-C(CH₃)(CH₂CH₃)O-H

CH₂=CHCOO-(CH₂CH₂O)₂-H

CH₂=CHCOO-(CH₂CH₂O)₄-H

CH₂=CHCOO-(CH₂CH₂O)₅-H

CH₂=CHCOO-(CH₂CH₂O)₆-H

CH₂=CHCOO-(CH₂CH₂O)₅-CH₃

CH₂=CHCOO-(CH₂CH₂O)₉-CH₃

CH₂=CHCOO-(CH₂CH₂O)₂₃-CH₃

CH₂=CHCOO-(CH₂CH₂O)₉₀-CH₃

CH₂=CHCOO-(CH₂CH(CH₃)O)₉-H

CH₂=CHCOO-(CH₂CH(CH₃)O)₉-CH₃

CH₂=CHCOO-(CH₂CH(CH₃)O)₁₂-CH₃

CH₂=CHCOO-(CH₂CH₂O)₅-(CH₂CH(CH₃)O)₂-H

CH₂=CHCOO-(CH₂CH₂O)₅-(CH₂CH(CH₃)O)₃-CH₃

CH₂=CHCOO-(CH₂CH₂O)₈-(CH₂CH(CH₃)O)₆-CH₂CH(C₂H₅)C₄H₉

CH₂=CHCOO-(CH₂CH₂O)₂₃-OOC(CH₃)C=CH₂

CH₂=CHCOO-(CH₂CH₂O)₂₀-(CH₂CH(CH₃)O)₅-CH₂-CH=CH₂

CH₂=CHCOO-(CH₂CH₂O)₉-H

CH₂=C(CH₃)COO-CH₂CH₂O-H

CH₂=C(CH₃)COO-CH₂CH₂CH₂O-H

CH₂=C(CH₃)COO-CH₂CH(CH₃)O-H

CH₂=C(CH₃)COO-CH (CH₃)CH₂O-H

CH₂=C(CH₃)COO-CH₂CH₂CH₂CH₂O-H

CH₂=C(CH₃)COO-CH₂CH₂CH(CH₃)O-H

CH₂=C(CH₃)COO-CH₂CH(CH₃)CH₂O-H

CH₂=C(CH₃)COO-CH (CH₃)CH₂CH₂O-H

CH₂=C(CH₃)COO-CH₂CH(CH₂CH₃)O-H

CH₂=C(CH₃)COO-CH₂C(CH₃)₂O-H

CH₂=C(CH₃)COO-CH(CH₂CH₃)CH₂O-H

CH₂=C(CH₃)COO-C (CH₃)₂CH₂O-H

CH₂=C(CH₃)COO-CH (CH₃)CH (CH₃)O-H

CH₂=C(CH₃)COO-C(CH₃)(CH₂CH₃)O-H

CH₂=C(CH₃)COO-(CH₂CH₂O)₂-H

CH₂=C(CH₃)COO-(CH₂CH₂O)₄-H

CH₂=C(CH₃)COO-(CH₂CH₂O)₅-H

CH₂=C(CH₃)COO-(CH₂CH₂O)₆-H

CH₂=C(CH₃)COO-(CH₂CH₂O)₉-H

CH₂=C(CH₃)COO-(CH₂CH₂O)₅-CH₃

CH₂=C(CH₃)COO-(CH₂CH₂O)₉-CH₃

CH₂=C(CH₃)COO-(CH₂CH₂O)₂₃-CH₃

CH₂=C(CH₃)COO-(CH₂CH₂O)₉₀-CH₃

CH₂=C(CH₃)COO-(CH₂CH(CH₃)O)₉-H

CH₂=C(CH₃)COO-(CH₂CH(CH₃)O)₉-CH₃

CH₂=C(CH₃)COO-(CH₂CH(CH₃)O)₁₂-CH₃

CH₂=C(CH₃)COO-(CH₂CH₂O)₅-(CH₂CH(CH₃)O)₂-H

CH₂=C(CH₃)COO-(CH₂CH₂O)₅-(CH₂CH(CH₃)O)₃-CH₃

CH₂=C(CH₃)COO-(CH₂CH₂O)₈-(CH₂CH(CH₃)O)₆-CH₂CH(C₂H₅)C₄H₉

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-CH₂-CH=CH₂

CH₂=CH-C(=O)-NH-CH₂CH₂O-H

CH₂=CH-C(=O)-NH-CH₂CH₂CH₂O-H

CH₂=CH-C(=O)-NH-CH₂CH(CH₃)O-H

CH₂=CH-C(=O)-NH-CH(CH₃)CH₂O-H

CH₂=CH-C(=O)-NH-CH₂CH₂CH₂CH₂O-H

CH₂=CH-C(=O)-NH-CH₂CH₂CH(CH₃)O-H

CH₂=CH-C(=O)-NH-CH₂CH(CH₃)CH₂O-H

CH₂=CH-C(=O)-NH-CH(CH₃)CH₂CH₂O-H

CH₂=CH-C(=O)-NH-CH₂CH(CH₂CH₃)O-H

CH₂=CH-C(=O)-NH-CH₂C(CH₃)₂O-H

CH₂=CH-C(=O)-NH-CH(CH₂CH₃)CH₂O-H

CH₂=CH-C(=O)-NH-C(CH₃)₂CH₂O-H

CH₂=CH-C(=O)-NH-CH(CH₃)CH(CH₃)O-H

CH₂=CH-C(=O)-NH-C(CH₃)(CH₂CH₃)O-H

CH₂=CH-C(=O)-NH-(CH₂CH₂O)₂-H

CH₂=CH-C(=O)-NH-(CH₂CH₂O)₄-H

CH₂=CH-C(=O)-NH-(CH₂CH₂O)₅-H

CH₂=CH-C(=O)-NH-(CH₂CH₂O)₆-H

CH₂=CH-C(=O)-NH-(CH₂CH₂O)₉-H

CH₂=CH-C(=O)-NH-(CH₂CH₂O)₅-CH₃

CH₂=CH-C(=O)-NH-(CH₂CH₂O)₉-CH₃

CH₂=CH-C(=O)-NH-(CH₂CH₂O)₂₃-CH₃

CH₂=CH-C(=O)-NH-(CH₂CH₂O)₉₀-CH₃

CH₂=CH-C(=O)-NH-(CH₂CH(CH₃)O)₉-H

CH₂=CH-C(=O)-NH-(CH₂CH(CH₃)O)₉-CH₃

CH₂=CH-C(=O)-NH-(CH₂CH(CH₃)O)₁₂-CH₃

CH₂=CH-C(=O)-NH-(CH₂CH₂O)₅-(CH₂CH(CH₃)O)₂-H

CH₂=CH-C(=O)-NH-(CH₂CH₂O)₅-(CH₂CH(CH₃)O)₃-CH₃

CH₂=CH-C(=O)-NH-(CH₂CH₂O)₈-(CH₂CH(CH₃)O)₆-CH₂CH(C₂H₅)C₄H₉

CH₂=C(CH₃)-C(=O)-NH-CH₂CH₂O-H

CH₂=C(CH₃)-C(=O)-NH-CH₂CH₂CH₂O-H

CH₂=C(CH₃)-C(=O)-NH-CH₂CH(CH₃)O-H

CH₂=C(CH₃)-C(=O)-NH-CH(CH₃)CH₂O-H

CH₂=C(CH₃)-C(=O)-NH-CH₂CH₂CH₂CH₂O-H

CH₂=C(CH₃)-C(=O)-NH-CH₂CH₂CH(CH₃)O-H

CH₂=C(CH₃)-C(=O)-NH-CH₂CH(CH₃)CH₂O-H

CH₂=C(CH₃)-C(=O)-NH-CH(CH₃)CH₂CH₂O-H

CH₂=C(CH₃)-C(=O)-NH-CH₂CH(CH₂CH₃)O-H

CH₂=C(CH₃)-C(=O)-NH-CH₂C(CH₃)₂O-H

CH₂=C(CH₃)-C(=O)-NH-CH(CH₂CH₃)CH₂O-H

CH₂=C(CH₃)-C(=O)-NH-C(CH₃)₂CH₂O-H

CH₂=C(CH₃)-C(=O)-NH-CH(CH₃)CH(CH₃)O-H

CH₂=C(CH₃)-C(=O)-NH-C(CH₃)(CH₂CH₃)O-H

CH₂=C(CH₃)-C(=O)-NH-(CH₂CH₂O)₂-H

CH₂=C(CH₃)-C(=O)-NH-(CH₂CH₂O)₄-H

CH₂=C(CH₃)-C(=O)-NH-(CH₂CH₂O)₅-H

CH₂=C(CH₃)-C(=O)-NH-(CH₂CH₂O)₆-H

CH₂=C(CH₃)-C(=O)-NH-(CH₂CH₂O)₉-H

CH₂=C(CH₃)-C(=O)-NH-(CH₂CH₂O)₅-CH₃

CH₂=C(CH₃)-C(=O)-NH-(CH₂CH₂O)₉-CH₃

CH₂=C(CH₃)-C(=O)-NH-(CH₂CH₂O)₂₃-CH₃

CH₂=C(CH₃)-C(=O)-NH-(CH₂CH₂O)₉₀-CH₃

CH₂=C(CH₃)-C(=O)-NH-(CH₂CH(CH₃)O)₉-H

CH₂=C(CH₃)-C(=O)-NH-(CH₂CH(CH₃)O)₉-CH₃

CH₂=C(CH₃)-C(=O)-NH-(CH₂CH(CH₃)O)₁₂-CH₃

CH₂=C(CH₃)-C(=O)-NH-(CH₂CH₂O)₅-(CH₂CH(CH₃)O)₂-H

CH₂=C(CH₃)-C(=O)-NH-(CH₂CH₂O)₅-(CH₂CH(CH₃)O)₃-CH₃

CH₂=C(CH₃)-C(=O)-NH-(CH₂CH₂O)₈-(CH₂CH(CH₃)O)₆-CH₂CH(C₂H₅)C₄H₉

The monomer (b) is preferably acrylate or acrylamide in which X² is a hydrogen atom. The monomer (b) is particularly preferably hydroxyethyl acrylate, hydroxypropyl acrylate, hydroxybutyl acrylate or hydroxyethyl acrylamide.

### [(c) Ion-donating group-containing monomer]

For example, the hydrocarbon-containing polymer (1) may contain an ion-donating group-containing monomer (c). The monomer (c) is a monomer other than the monomer (a) and monomer (b). The monomer (c) is preferably a monomer (particularly an acrylic monomer) containing an olefinic carbon-carbon double bond and an ion-donating group. The ion-donating group is an anion-donating group and/or a cation-donating group.

Examples of the monomer having an anion-donating group include a monomer having a carboxyl group, a sulfonic acid group, or a phosphoric acid group. Specific examples of the monomer having an anion-donating group include (meth)acrylic acid, crotonic acid, maleic acid, fumaric acid, itaconic acid, citraconic acid, vinylsulfonic acid, (meth)allylsulfonic acid, styrenesulfonic acid, and phosphoric acid (meth)acrylate, vinylbenzenesulfonic acid, acrylamide tert-butylsulfonic acid, and the like, or salts thereof.

Examples of the salt of the anion-donating group include an alkali metal salt, an alkaline earth metal salt, or an ammonium salt, for example, a methylammonium salt, ethanolammonium salt, triethanolammonium salt, and the like.

In the monomer having a cation-donating group, examples of the cation-donating group are an amino group, preferably a tertiary amino group and a quaternary amino group. In the tertiary amino group, the two groups bonded to the nitrogen atom are the same or different, and they are each preferably an aliphatic group having 1 to 5 carbon atoms (particularly an alkyl group), an aromatic group having 6 to 20 carbon atoms (aryl group) or an aromatic aliphatic group having 7 to 25 carbon atoms (particularly an aralkyl group, for example, a benzyl group (C₆H₅-CH₂-)). In the quaternary amino group, the three groups bonded to the nitrogen atom are the same or different, and they are each preferably an aliphatic group having 1 to 5 carbon atoms (particularly an alkyl group), an aromatic group having 6 to 20 carbon atoms (aryl group), or an aromatic aliphatic group having 7 or more and 25 or less carbon atoms (particularly an aralkyl group, such as a benzyl group (C₆H₅-CH₂-)). In the tertiary amino group and the quaternary amino group, the rest of one group bonded to the nitrogen atom may have a carbon-carbon double bond. The cation-donating group may be in the form of salt.

The cation-donating group that is a salt is a salt with an acid (organic acid or inorganic acid). An organic acid, such as a carboxylic acid having 1 to 20 carbon atoms (particularly monocarboxylic acids such as acetic acid, propionic acid, butyric acid, and stearic acid) is preferred. Dimethylaminoethyl (meth)acrylate, diethylaminoethyl (meth)acrylate and salts thereof are preferred.

Specific examples of the monomer having a cation-donating group are as follows.
CH₂=CHCOO-CH₂CH₂-N(CH₃)₂ and its salt (for example, acetic acid salt)
CH₂=CHCOO-CH₂CH₂-N(CH₂CH₃)₂ and its salt (for example, acetic acid salt)
CH₂=C(CH₃)COO-CH₂CH₂-N(CH₃)₂ and its salt (for example, acetic acid salt)
a CH₂=C(CH₃)COO-CH₂CH₂-N(CH₂CH₃)₂ and its salt (for example, acetic acid salt)
a CH₂=CHC(O)N(H)-CH₂CH₂CH₂-N(CH₃)₂ and its salt (for example, acetic acid salt)
CH₂=CHCOO-CH₂CH₂-N(-CH₃)(-CH₂-C₆H₅) and its salt (for example, acetic acid salt)
CH₂=C(CH₃)COO-CH₂CH₂-N(-CH₂CH₃)(-CH₂-C₆H₅) and its salt (for example, acetic acid salt)

   CH₂=CHCOO-CH₂CH₂-N⁺(CH₃)₃Cl⁻

   CH₂=CHCOO-CH₂CH₂-N⁺(-CH₃)₂(-CH₂-C₆H₅)Cl⁻

   CH₂=C(CH₃)COO-CH₂CH₂-N⁺(CH₃)₃Cl⁻

   CH₂=CHCOO-CH₂CH(OH)CH₂-N⁺(CH₃)₃Cl⁻

   CH₂=C(CH₃)COO-CH₂CH(OH)CH₂-N⁺(CH₃)₃Cl⁻

   CH₂=C(CH₃)COO-CH₂CH(OH)CH₂-N⁺(-CH₂CH₃)₂(-CH₂-C₆H₅)Cl⁻

   CH₂=C(CH₃)COO-CH₂CH₂-N⁺(CH₃)₃Br⁻

   CH₂=C(CH₃)COO-CH₂CH₂-N⁺(CH₃)₃I⁻

   CH₂=C(CH₃)COO-CH₂CH₂-N⁺(CH₃)₃O-SO₃CH₃

   CH₂=C(CH₃)COO-CH₂CH₂-N⁺(CH₃)(-CH₂-C₆H₅)₂Br⁻

The ion-donating group-containing monomer (c) is preferably methacrylic acid, acrylic acid, or dimethylaminoethyl methacrylate and more preferably methacrylic acid or dimethylaminoethyl methacrylate.

### [(d) Other monomer]

The hydrocarbon-containing polymer (1) may have a repeating unit derived from a monomer other than the monomers (a) to (c). Examples of the other monomer include a halogenated olefin monomer, a cross-linkable monomer, and the like.

### (Halogenated olefin monomer)

The hydrocarbon-containing polymer (1) may have a repeating unit derived from a halogenated olefin monomer. The halogenated olefin monomer is preferably free of a fluorine atom. The halogenated olefin monomer is preferably an olefin having 2 to 20 carbon atoms substituted with 1 to 10 chlorine atoms, bromine atoms, or iodine atoms. The halogenated olefin monomer is preferably a chlorinated olefin having 2 to 20 carbon atoms, particularly an olefin with 1 to 5 chlorine atoms, having 2 to 5 carbon atoms. Preferred specific examples of the halogenated olefin monomers are vinyl halides such as vinyl chloride, vinyl bromide, and vinyl iodide, and vinylidene halides such as vinylidene dichloride, vinylidene dibromide, and vinylidene diiodide. Vinyl chloride is preferred because of its high water-repellency (in particular durability of water-repellency). The presence of a repeating unit derived from the halogenated olefin monomer increases washing durability that the hydrocarbon-containing polymer (1) renders.

### (Cross-linkable monomer)

In the hydrocarbon-containing polymer (1), the cross-linkable monomer has at least two reactive groups and/or an ethylenically unsaturated double bond (preferably a (meth)acrylate group), and the cross-linkable monomer (d) may be a monomer free of a fluorine atom. The cross-linkable monomer may be a compound free of a fluorine atom. The cross-linkable monomer (d) may be a compound having at least two ethylenically unsaturated double bonds (preferably a (meth)acrylate group), or a compound having at least one ethylenically unsaturated double bond and at least one reactive group. Examples of the reactive group include a hydroxyl group, an epoxy group, a chloromethyl group, a blocked isocyanate group, an amino group, and a carboxyl group.

The cross-linkable monomer may be a mono (meth) acrylate, di(meth)acrylate or mono (meth) acrylamide, which have a reactive group. Alternatively, the cross-linkable monomer may be di(meth)acrylate.

One example of the cross-linkable monomer is a vinyl monomer with a hydroxyl group. Examples of the cross-linkable monomers include for example, diacetone (meth)acrylamide, 3-chloro-2-hydroxypropyl (meth)acrylate, 2-acetoacetoxyethyl (meth)acrylate, butadiene, isoprene, chloroprene, monochlorovinyl acetate, vinyl methacrylate, glycidyl (meth)acrylate, 1,4-butanediol di(meth)acrylate, 1,6-hexanediol di(meth)acrylate, 1,9-nonanediol di(meth)acrylate, neopentyl glycol di(meth)acrylate, and the like, but are not limited thereto.

### (Cyclic hydrocarbon group-containing monomer)

The hydrocarbon-containing polymer (1) may have a cyclic hydrocarbon group-containing monomer. The cyclic hydrocarbon group-containing monomer is a monomer having a cyclic hydrocarbon group, and may be a monomer having one ethylenically unsaturated double bond and a cyclic hydrocarbon group.

The cyclic hydrocarbon group-containing monomer preferably has a (meth)acrylic group as an ethylenically unsaturated double bond, and may have, for example, a (meth)acrylate group or a (meth)acrylamide group as an ethylenically unsaturated double bond.

The cyclic hydrocarbon group may be alicyclic or aromatic, and it preferably alicyclic. The cyclic hydrocarbon group may be saturated or unsaturated and is preferably saturated. The cyclic hydrocarbon group may be a monocyclic group, polycyclic group, or bridged ring group and is preferably the bridged ring group. The cyclic hydrocarbon group may have a chain group (for example, linear or branched chain hydrocarbon group).

The number of carbon atoms of the cyclic hydrocarbon group may be 4 or more, 6 or more, or 8 or more, and may be 30 or less, 26 or less, 22 or less, 18 or less, or 14 or less.

Specific examples of the cyclic hydrocarbon groups include a cyclohexyl group, t-butylcyclohexyl group, adamantyl group, 2-methyl-2-adamantyl group, 2-ethyl-2-adamantyl group, bornyl group, isobornyl group, norbornyl group, dicyclopentanyl group, dicyclopentenyl group, benzyl group, phenyl group, naphthyl group, 2-t-butylphenyl group, a residual group formed by removing one or more hydrogen atoms from any of these groups (for example, a cyclohexylene group, adamantylene group, phenylene group, and naphthylene group), and a group formed by substituting any of these groups.

Specific examples of the cyclic hydrocarbon group-containing monomers include cyclohexyl(meth)acrylate, t-butylcyclohexyl (meth)acrylate, benzyl (meth)acrylate, isobornyl (meth)acrylate, dicyclopentanyl (meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate, compounds in which these acrylates are substituted with acrylamides, styrene, α-methylstyrene, p-methylstyrene, and the like. These may be used singly or in combination of two or more thereof.

The other monomer (d) is not limited to these examples, and include acrylonitrile, an organosiloxane-containing (meth)acrylate, a short-chain alkyl (meth)acrylate, vinyl acetate, a vinyl alkyl ether, and the like. The other monomer (d) may be used singly or in combinations of two or more thereof.

### [Composition of polymer (1)]

Examples of combinations of monomers constituting a repeating unit of the hydrocarbon-containing polymer (1) are as follows.
The monomer (a)
The monomer (a) + the monomer (b)
The monomer (a) + the monomer (c)
The monomer (a) + the monomer (b) + the monomer (c)
The monomer (a) + the monomer (b) + the monomer (d)
The monomer (a) + the monomer (c) + the monomer (d)
The monomer (a) + the monomer (b) + the monomer (c) + the monomer (d)

The combination of monomers constituting a repeating unit of the polymer is preferably "the monomer (a) + the monomer (b) + the monomer (c)."

The amount of repeating unit formed of the monomer (a) (repeating unit (a)) may be 30% by weight or more, 40% by weight or more, 50% by weight or more, 60% by weight or more, or 70% by weight or more, and may be 95% by weight or less, 85% by weight or less, 75% by weight or less, 65% by weight % or less, 55% by weight or less, or 45% by weight or less, based on the hydrocarbon-containing polymer (or based on the total of the repeating unit (a) and the repeating unit (b)).

The amount of repeating unit formed of the monomer (b) (repeating unit (b)) may be 3% by weight or more, 5% by weight or more, 10% by weight or more, 15% by weight or more, 20% by weight or more, or 25% by weight or more, and may be 50% by weight or less, 40% by weight or less, 30% by weight or less, 20% by weight % or less, 10% by weight or less, or 5% by weight or less, based on the hydrocarbon-containing polymer (or based on the total of the repeating unit (a) and the repeating unit (b)).

The amount of repeating unit formed of the monomer (c) (repeating unit (c)) may be 3% by weight or more, 5% by weight or more, 10% by weight or more, 15% by weight or more, 20% by weight or more, or 25% by weight or more, and may be 50% by weight or less, 40% by weight or less, 30% by weight or less, 20% by weight % or less, 10% by weight or less, or 5% by weight or less, based on the hydrocarbon-containing polymer (or based on the total of the repeating unit (a) and the repeating unit (b)).

The amount of repeating unit formed of the monomer (d) (repeating unit (d)) may be 3% by weight or more, 5% by weight or more, 10% by weight or more, 15% by weight or more, 20% by weight or more, or 25% by weight or more, and may be 50% by weight or less, 40% by weight or less, 30% by weight or less, 20% by weight % or less, 10% by weight or less, or 5% by weight or less, based on the hydrocarbon-containing polymer (or based on the total of the repeating unit (a) and the repeating unit (b)).

### [Polymerization method]

The hydrocarbon-containing polymer (1) can be produced by a known polymerization method, and the conditions for the polymerization reaction can also be arbitrarily selected. Examples of such a polymerization method include solution polymerization, suspension polymerization, emulsion polymerization, and condensation polymerization.

In solution polymerization, a method is employed in which a monomer is dissolved in an organic solvent in the presence of a polymerization initiator, and after nitrogen substitution, the solution is heated and stirred at a temperature in the range of 30 to 120°C for 1 to 10 hours. Examples of the polymerization initiator include, for example, azobisisobutyronitrile, benzoyl peroxide, di-t-butyl peroxide, lauryl peroxide, cumene hydroperoxide, t-butyl peroxypivalate, diisopropyl peroxydicarbonate, and the like. The polymerization initiator is used in the range of 0.01 to 20 parts by weight, for example, 0.01 to 10 parts by weight, based on 100 parts by weight of the monomer.

The organic solvent is inert to the monomers and dissolves them, and may be, for example, esters (for example, esters having 2 to 40 carbon atoms, specifically ethyl acetate and butyl acetate), ketones (for example, ketones having 2 to 40 carbon atoms, specifically methyl ethyl ketone, diisobutyl ketone, and methyl isobutyl ketone), alcohols (for example, alcohols having 1 to 40 carbon atoms, specifically ethanol, butanol, and isopropyl alcohol). Specific examples of the organic solvents include acetone, chloroform, HCHC225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane, trichlorotrifluoroethane and the like. The organic solvent is used in an amount of 10 to 3,000 parts by weight, for example, 50 to 2,000 parts by weight, based on 100 parts by weight of the total of the monomers.

In emulsion polymerization, a method is employed in which a monomer is emulsified in water in the presence of a polymerization initiator and an emulsifier, and after nitrogen substitution, polymerization is carried out by stirring at a temperature in the range of 50 to 80°C for 1 to 20 hours. The polymerization initiators for use are water-soluble initiators such as benzoyl peroxide, lauroyl peroxide, t-butyl perbenzoate, 1-hydroxycyclohexylhydroperoxide, 3-carboxypropionyl peroxide, acetyl peroxide, azobisisobutyramidine dihydrochloride, sodium peroxide, potassium persulfate, and ammonium persulfate, and oil-soluble initiators such as azobisisobutyronitrile, benzoyl peroxide, di-t-butyl peroxide, lauryl peroxide, cumene hydroperoxide, and t-butyl peroxypivalate and diisopropyl peroxydicarbonate. The polymerization initiator is used in the range of 0.01 to 10 parts by weight, based on 100 parts by weight of the monomer.

In order to obtain an aqueous dispersion of polymer having excellent standing stability, it is desirable to micronize the monomer in water and then polymerize by using an emulsifying apparatus, such as a high-pressure homogenizer or an ultrasonic homogenizer which can apply intense crushing energy. Moreover, the emulsifying agent can be any of various types of anionic, cationic, and nonionic emulsifying agents, and is used in the range of 0.5 to 20 parts by weight, based on 100 parts by weight of the monomer. Anionic and/or nonionic and/or cationic emulsifiers are preferably used. When the monomers are not completely compatible, a compatibilizer allowing these monomers to be sufficiently compatible therewith, such as a water-soluble organic solvent or a low molecular weight monomer, is preferably used. The addition of the compatibilizer can improve emulsification properties and copolymerization properties.

As the water-soluble organic solvent, the organic solvents described above may be used. Examples thereof include acetone, methyl ethyl ketone, ethyl acetate, propylene glycol, dipropylene glycol monomethyl ether, dipropylene glycol, tripropylene glycol, ethanol, and the like, and they may be used in an amount within the range of 1 to 50 parts by weight, for example 10 to 40 parts by weight, based on 100 parts by weight of water. Examples of the low molecular weight monomers include methyl methacrylate, glycidyl methacrylate, 2,2,2-trifluoroethyl methacrylate, and the like, and they may be used in an amount within the range of 1 to 50 parts by weight, for example, 10 to 40 parts by weight based on 100 parts by weight of the total amount of monomers.

A chain transfer agent may be used in the polymerization. The molecular weight of the polymer can be changed according to the amount of the chain transfer agent used. Examples of the chain transfer agent include mercaptan group-containing compounds such as lauryl mercaptan, thioglycol, and thioglycerol (particularly alkyl mercaptans (for example, having 1 to 40 carbon atoms)), and inorganic salts such as sodium hypophosphite and sodium hydrogen sulfite. The amount of the chain transfer agent used may be in the range of 0.01 to 10 part by weight, for example, 0.1 to 5 parts by weight, relative to 100 parts by weight of the total amount of the monomers.

### [Amount of hydrocarbon group-containing polymer]

The amount of the hydrocarbon group-containing polymer in the oil-resistant agent may be 0.01% by weight or more, 0.03% by weight or more, 0.5% by weight or more, 1% by weight or more, 3% by weight or more, 5% by weight or more, 10% by weight or more, 20% by weight or more, and 30% by weight or more, and it may be 60% by weight or less, 50% by weight or less, 40% by weight or less, 30% by weight or less, 20% by weight or less, 10% by weight or less, 5% by weight or less, or 3% by weight or less. The hydrocarbon group-containing polymer itself may be used as an oil-resistant agent.

### {(2) Water-soluble polymer}

The oil-resistance agents in the present disclosure include a water-soluble polymer (2).

The weight-average molecular weight of the water-soluble polymer (2) may be 1,000 or more, 3,000 or more, 5,000 or more, 10,000 or more, 30,000 or more, 100,000 or more, 300,000 or more, or 500,000 or more, and it may be 1,000,000 or less, 750,000 or less, 500,000 or less, 3,000,000 or less, 100,000 or less, 75,000 or less, 50,000 or less, 30,000 or less, 10,000 or less, 5,000 or less, or 3,000 or less.

The water-soluble polymer (2) may be hydrophobically modified. For example, the hydrophobically modified water-soluble polymer (2) may refer to a compound in which a hydrophobic functional group (for example, a hydrocarbon group having 6 or more carbon atoms, 10 or more carbon atoms, 12 or more carbon atoms, 15 or more carbon atoms, or 18 or more carbon atoms) is modified with, for examples, 1 or more, 2 or more, 3 or more, 5 or more, 10 or more, 30 or more, or 50 or more.

The water-soluble polymer (2) may be a polyhydric carboxylic acid. The water-soluble polymer (2) may have other acidic functional group.

Examples of the water-soluble polymer (2) include a polysaccharide, a synthetic polyol, a polyamine, a polyamide, a polyether, and the like, and are preferably a polysaccharide or s synthetic polyol as a preferred example.

The water-soluble polymer (2) is preferably a polyol, and in particular may be a polysaccharide or a synthetic polyol. The number of hydroxy groups that the polyol has may be 10 or more, 15 or more, 30 or more, 50 or more, or 100 or more, and may be 3,000 or less, 1,000 or less, 750 or less, 500 or less, 300 or less, 100 or less, 50 or less, 30 or less, or 20 or less.

The polysaccharide may be an acidic polysaccharide, a neutral saccharide and/or a basic saccharide, but is preferably neutral.

The acidic polysaccharide is generally a polysaccharide having a carboxyl group (-COOH) and the like. Specific examples of the acidic polysaccharides are carrageenan, pectin, Gum Arabic, xanthan gum, gellan gum, agar, and Gum Tragacanth. The neutral polysaccharide is a polysaccharide that is electrically neutral. Specific examples of the neutral polysaccharides are tamarind seed gum, Guar Gum, Locust bean gum, starch, and pullulan. The basic polysaccharide is a polysaccharide having an amino group (-NH₂) and the like. A specific example of the basic polysaccharide is chitosan. Specific examples of the polysaccharides include starch, xanthan gum, Gum kayara, welan gum, Guar Gum, pectin, tamarind gum, carrageenan, chitosan, Gum Arabic, Locust bean gum, cellulose, alginic acid, agar, dextran, and pullulan.

As the polysaccharide, starch is preferred. The starch may be unmodified starch or modified starch. The starch may be modified starch subjected to at least one modification such as esterification modification, hydrophobized starch, etherification modification, oxidation modification, alkali modification, enzymatic modification, or bleaching modification. Examples of the modified starch include acetylated distarch adipate, acetylated oxidized starch, acetylated distarch phosphate, starach alkenyl succinate, acetic acid starch, oxidized starch, and hydroxyalkylated starch (with an alkyl group having 2 to 40 or 2 to 10 carbon atoms in particular 2 or 3 carbon atoms), hydroxyalkyl distarch phosphate (with an alkyl group having 2 to 40 or 2 to 10 carbon atoms in particular 2 or 3 carbon atoms), distarch phosphate, monostarch phosphate, phosphated distarch phosphate, acid-modified starch, alkali-treated starch, enzyme-treated starch, bleach-treated starch, and cationized starch (quaternary ammoniated starch). Dextrin in which starch was chemically or enzymatically converted to a low molecular weight of starch, can also be included. The starch may be pregelatinized starch. The pregelatinized starch refers to starch in which the hydrogen bond between the sugar chain in starch is broken, freeing the sugar chain.

The synthetic polyol is a synthetic polyol having a plurality (for example, 10 or more, 50 or more, 100 or more, or 500 or more) of hydroxy groups in the molecule, and examples thereof preferably include a polyglycerin, a polyvinyl alcohol, a hydroxyethyl (meth)acrylate polymer, a hydroxypropyl (meth)acrylate polymer, a hydroxybutyl (meth)acrylate polymer, a polyvinyl alcohol, and the like, and the polyol may be particularly a polyvinyl alcohol.

Specific examples of the water-soluble polymer (2) include polysaccharides such as starch, pullulan, amylose, cellulose, a cellulose derivative, carrageenan, Guar Gum, chitin, chitosan, Locust bean gum, kappa-carrageenan, iota carrageenan, isomaltodextrin, gellan gum, and tamarind seed gum; synthetic polyols such as a polyglycerin, a polyvinyl alcohol, a hydroxyethyl (meth)acrylate polymer, a hydroxypropyl (meth)acrylate polymer, a hydroxybutyl (meth) acrylate polymer, and a polyvinyl alcohol; polyamines such a polyethyleneimine, a polyvinylamine and a polyallylamine; polyamides such as a polyvinylpyrrolidone, a polyacrylamide, a poly(N,N-dimethylacrylamide), a poly(N-vinylacetamide), a poly-N-isopropylacrylamide, a polyoxazoline (for example, poly(2-methyl-2-oxazoline), a poly(2-ethyl-2-oxazoline), a poly(2-propyl-2-oxazoline)), and a polyamideimide; polyethers such as a polyethylene glycol, a polypropylene glycol, and a polyvinyl methyl ether.

### [Amount]

The amount of the water-soluble polymer (2) is 30 parts by weight or more, 100 parts by weight or more, 300 parts by weight or more, 500 parts by weight or more, 750 parts by weight or more, 1,000 parts by weight or more, 1,500 parts by weight or more, or 2,000 parts by weight or more, and may be 5,000 parts by weight or less, 4,500 parts by weight or less, 4,000 parts by weight or less, 3,500 parts by weight or less, 3,000 parts by weight or less, 2,500 parts by weight parts by weight or less, 2,000 parts by weight or less, 1,500 parts by weight or less, 1,000 parts by weight or less, 750 parts by weight or less, 500 parts by weight or less, or 300 parts by weight or less, based on 100 parts by weight of the hydrocarbon-containing polymer (1).

### {(3) Polyhydric carboxylic acid}

The oil-resistant agent in the present disclosure contains a polyhydric carboxylic acid (3). The polyhydric carboxylic acid (3) contains two or more carboxylic acids in the molecule. The oil-resistant agent in the present disclosure has favorable oil-resistance by containing the polyhydric carboxylic acid (3), and can improve oil stains from folds. The polyhydric carboxylic acid can also inhibit foaming when an oil-resistant agent is treated.

The weight-average molecular weight of the polyhydric carboxylic acid (3) may be 100 or more, 150 or more, 200 or more, or 250 or more, and may also be 1,000,000 or less, 750,000 or less, 500,000 or less, 3,000,000 or less, 100,000 or less, 75,000 or less, 50,000 or less, 30,000 or less, 10,000 or less, 5,000 or less, 3,000 or less, 2,000 or less, 1,000 or less, 750 or less, 500 or less, or 300 or less. The polycarboxylic acid preferably has a low molecular weight (for example, a molecular weight of 1,000 or less).

The polyhydric carboxylic acid (3) may be a natural product, a synthetic product, or a partially synthetic product.

Examples of the polycarboxylic acids include an aromatic polycarboxylic acid, an aliphatic polycarboxylic acid, a hydroxy polycarboxylic acid, a polymeric polycarboxylic acid, and the like and preferred examples thereof include a hydroxy polycarboxylic acid.

Specific examples of the polycarboxylic acid (3) include aromatic polycarboxylic acids such as phthalic acid, terephthalic acid, isophthalic acid, trimellitic acid, trimesic acid, and pyromellitic acid; aliphatic polycarboxylic acids such as succinic acid, adipic acid, azelaic acid, sebacic acid, oxalic acid, fumaric acid, maleic acid, and tetrahydrophthalic acid; hydroxy polycarboxylic acids having a hydroxyl group in the molecule such as citric acid, malic acid, tartaric acid, and tartronic acid, and polymeric polycarboxylic acids such as a poly(meth)acrylic acid, alginic acid, a polycarboxylic acid, and hyaluronic acid.

### [Amount]

The amount of the polyhydric carboxylic acid (3) may be 10 parts by weight or more, 30 parts by weight or more, 60 parts by weight or more, 90 parts by weight or more, 120 parts by weight or more, 150 parts by weight or more, 180 parts by weight or more, 200 parts by weight or more, or 250 parts by weight or more, and may be 2,000 parts by weight or less, 1,500 parts by weight or less, 1,000 parts by weight or less, 750 parts by weight or less, 500 parts by weight or less, 400 parts by weight or less, 300 parts by weight or less, 200 parts by weight or less, 100 parts by weight or less, based on 100 parts by weight of the hydrocarbon-containing polymer (1).

### {Dispersant}

The oil-resistant agent of the present disclosure may contain a dispersant, or may be free thereof. In particular, when the monomer (c) is present, water dispersibility of the hydrocarbon-containing polymer (1) improves, making it possible to reduce the amount of dispersant.

The dispersant is selected from organic dispersants and inorganic dispersants. It may be at least one type. The dispersant may be non-anionic and may be at least one selected from a nonionic dispersant, a cationic dispersant, an amphoteric dispersant, and an inorganic dispersant. For example, the oil-resistant agent may be free of an anionic dispersant. For example, the dispersant may contain a dispersant other than a fatty acid ester.

The dispersant for use may be an organic dispersant or an inorganic dispersant, or a combination of an organic dispersant and an inorganic dispersant.

As the dispersant, for example, an organic dispersant may be used. The organic dispersants can be classified into a nonionic dispersant, an anionic dispersant, a cationic dispersant, and an amphoteric dispersant, and the organic dispersant may refer to a surfactant.

The dispersant may be non-fluorinated.

### [Nonionic dispersant]

For example, the dispersant may contain a nonionic dispersant. The nonionic dispersant may be a nonionic surfactant.

The nonionic dispersant may be of a low molecular type or a high molecular type. The molecular weight thereof may be 100 or more, 500 or more, 1,000 or more, 2,000 or more, 4,000 or more, or 6,000 or more, and may also be 100,000 or less, 50,000 or less, 10,000 or less, 7,500 or less, 5,000 or less, 2,500 or less, 1,000 or less, 750 or less, or 250 or less.

Examples of the nonionic dispersants include an ether, an ester, an ester ether, an alkanolamide, a polyol, and an amine oxide.

The ether is, for example, a compound having an oxyalkylene group (preferably a polyoxyethylene group).

The ester is, for example, an ester of an alcohol and a fatty acid. The alcohol is, for example, an alcohol which is monohydric to hexahydric (particularly dihydric to pentahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is monohydric to hexahydric (particularly dihydric to pentahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms in particular 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms in particular 5 to 30 carbon atoms. The alkanolamine may be an alkanol with 1 to 3 amino groups and 1 to 5 hydroxyl groups, having 2 to 50, particularly 5 to 30 carbon atoms.

The polyol may be a divalent to pentavalent alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, and an amine oxide, with a nonionic dispersant having an oxyalkylene group being preferred.

The nonionic dispersant may be alkylene oxide adducts of linear and/or branched (saturated and/or unsaturated) aliphatic groups, polyalkylene glycol esters of linear and/or branched (saturated and/or unsaturated) fatty acids, a polyoxyethylene (POE)/polyoxypropylene (POP) copolymer (random copolymer or block copolymer), an alkylene oxide adduct of acetylene glycol, and the like. Among them, the nonionic surfactant is preferably a surfactant such that the structures of the alkylene oxide addition moiety and polyalkylene glycol moiety are polyoxyethylene (POE) or polyoxypropylene (POP) or POE/POP copolymer (which may be a random or block copolymer, for example.).

The nonionic dispersant preferably has a structure free of an aromatic group.

The nonionic dispersant may be the compound represented by formula:

R¹O-(CH₂CH₂O)ₚ-(R²O)_{q}-R³

[wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.].

R¹ preferably has 8 to 20 carbon atoms, particularly 10 to 18 carbon atoms. Preferred specific examples of R¹ include a lauryl group, a tridecylic group, and an oleyl group.

R² is, for example, a propylene group and a butylene group.

In the nonionic dispersant, p may be a numeral of 3 or more (for example, 5 to 200). q may be a numeral of 2 or more (for example, 5 to 200). Namely, -(R²O)_{q}- may form, for example, a polyoxyalkylene chain.

The nonionic dispersant may be a polyoxyethylene alkylene alkyl ether containing a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain, with the oxypropylene chain being preferred among them.

Specific examples of the nonionic dispersants include condensates of ethylene oxide with hexylphenol, isooctatylphenol, hexadecanol, oleic acid, alkane (C₁₂-C₁₆) thiol, sorbitan monofatty acid (C₇-C₁₉) or an alkyl (C₁₂-C₁₈) amine, and the like, a sorbitan fatty acid ester, a glycerin fatty acid ester, a sucrose fatty acid ester, a propylene glycol fatty acid ester, a lecithin derivative, and the like.

The proportion of the polyoxyethylene block can be 5 to 80% by weight, for example, 30 to 75% by weight, in particular 40 to 70% by weight, based on the molecular weight of the nonionic dispersant (copolymer).

The average molecular weight of the nonionic dispersant is generally 300 to 5,000, for example 500 to 3,000.

The nonionic dispersant may be a single dispersant or a mixture of two or more thereof. The nonionic dispersant may be a mixture of a compound with an HLB (hydrophile-lipophile balance) of less than 15 (in particular 5 or less) and a compound with an HLB of 15 or more.

### [Cationic dispersant]

The dispersant may contain a cationic dispersant. The cationic dispersant may be a cationic surfactant. The cationic dispersant may be of a low molecular weight type (for example, a molecular weight of 2,000 or less, particularly 10,000 or less) or of a high molecular weight type (for example, a molecular weight of 2,000 or more). The cationic dispersant may be a compound free of an amide group.

The cationic dispersant may be of a low molecular type or a high molecular type. The molecular weight may be 100 or more, 500 or more, 1,000 or more, 2,000 or more, 4,000 or more, or 6,000 or more, and may also be 100,000 or less, 50,000 or less, 10,000 or less, 7,500 or less, 5,000 or less, 2,500 or less, 1,000 or less, 750 or less, or 250 or less.

The cationic dispersant may be an amine salt, a quaternary ammonium salt, or an oxyethylene addition type ammonium salt. Specific examples of the cationic dispersants include, but are not limited to, amine salt type dispersants such as an alkylamine salt, an aminoalcohol fatty acid derivative, a polyamine fatty acid derivative, and imidazoline, quaternary ammonium salt type dispersants such as an alkyltrimethylammonium salt, a dialkyldimethylammonium salt, an alkyldimethyl benzylammonium salt, a pyridinium salt, an alkylisoquinolinium salt, benzalkonium chloride, and benzethonium chloride, and the like.

Preferred examples of the cationic dispersants are the compounds represented by formula:

R²¹-N⁺(-R²²)(-R²³)(-R²⁴)X⁻

[wherein R²¹, R²², R²³, R²⁴ are each a hydrocarbon group having 1 to 40 carbon atoms, and
X is an anionic group.].

Specific examples of R²¹, R²², R²³, R²⁴ are alkyl groups (for example, a methyl group, a butyl group, a stearyl group, and a palmityl group). Specific examples of X are halogens (for example, chlorine) and acids (for example, hydrochloric acid and acetic acid).

The cationic dispersant is particularly preferably a monoalkyltrimethylammonium salt (alkyl having 4 to 40 carbon atoms).

The cationic dispersant is preferably an ammonium salt. The cationic dispersants may be the ammonium salt represented by formula:

R¹ₚ-N⁺R²_{q}X⁻

[wherein R¹ is a C12 or more (for example C₁₂ to C₅₀) linear and/or branched aliphatic (saturated and/or unsaturated) group,
R² is H or a C1 to C4 alkyl group, a benzyl group, a polyoxyethylene group (the number of oxyethylene group is, for example, 1 (particularly 2, especially 3) to 50),
and is particularly preferably CH₃ and C₂H₅,
X is a halogen atom (for example) and a C₁ to C₄ fatty acid base, p is 1 or 2, q is 2 or 3, and p + q=4.].

The number of carbon atoms of R¹ may be 12 to 50, for example, 12 to 30.

Specific examples of the cationic dispersants include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyldi(hydropolyoxyethylene)ammonium bromide, benzyldodecyl di(hydropolyoxyethylene) ammonium chloride, and N-[2-(diethylamino)ethyl]oleamide hydrochloride.

### [Anionic Dispersant]

The dispersant may contain an anionic dispersant. The anionic dispersant may be an anionic surfactant. The dispersant may be free of an anionic dispersant.

The anionic dispersant may be of a low molecular type or a high molecular type. The molecular weight may be 100 or more, 500 or more, 1,000 or more, 2,000 or more, 4,000 or more, or 6,000 or more, and may also be 100,000 or less, 50,000 or less, 10,000 or less, 7,500 or less, 5,000 or less, 2,500 or less, 1,000 or less, 750 or less, or 250 or less.

Examples of the anionic dispersants include an alkyl ether sulfate, an alkyl sulfate, an alkenyl ether sulfate, an alkenyl sulfate, an olefin sulfonate, an alkane sulfonate, a saturated or unsaturated fatty acid salt, an alkyl or alkenyl ether carboxylate, α-sulfone fatty acid salt, a N-acylamino acid type dispersant, a phosphoric acid mono- or diester type dispersant, and a sulfosuccinate ester.

### [Amphoteric Dispersant]

The dispersant may contain an amphoteric dispersant. The amphoteric dispersant may be an amphoteric surfactant.

The amphoteric dispersant may also be of a low molecular type or a high molecular type. The molecular weight may be 100 or more, 500 or more, 1,000 or more, 2,000 or more, 4,000 or more, or 6,000 or more, and may also be 100,000 or less, 50,000 or less, 10,000 or less, 7,500 or less, 5,000 or less, 2,500 or less, 1,000 or less, 750 or less, or 250 or less.

Examples of the amphoteric dispersant include alanines, imidazolinium betaines, amidobetaines, acetic acid betaine, and the like, and specifically include lauryl betaine, stearyl betaine, lauryl carboxymethyl hydroxyethylimidazolinium betaine, lauryl dimethylaminoacetic acid betaine, fatty acid amidopropyl dimethylaminoacetic acid betaine, and the like.

### [Inorganic Dispersant]

The dispersant may include an inorganic dispersant.

The average primary particle size of the inorganic dispersant may be 5 nm or larger, 30 nm or larger, 100 nm or larger, 1 µm or larger, 10 µm or larger, or 25 µm or larger, and may also be 100 µm or smaller, 50 µm or smaller, 10 µm or smaller, 1 µm or smaller, 500 nm or smaller, or 300 nm or smaller. The average primary particle size can be measured, for example, by observation using a microscope (scanning electron microscope or transmission electron microscope).

Examples of the inorganic dispersant include phosphoric acid polyvalent-metal salts such as tricalcium phosphate, magnesium phosphate, aluminum phosphate, and zinc phosphate, and hydroxyapatite; carbonates such as calcium carbonate and magnesium carbonate; silicates such as calcium metasilicate; sulfates such as calcium sulfate and barium sulfate; hydroxides such as calcium hydroxide, magnesium hydroxide, and aluminum hydroxide, and the like.

### [Amount]

The amount of the dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may also be 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight, based on 100 parts by weight of the hydrocarbon-containing polymer (1).

### {Liquid Medium}

For example, the oil-resistant agent in the present disclosure may include a liquid medium. The liquid medium may be water, an organic solvent, or a mixture of water and an organic solvent. The oil-resistant agent may be a dispersion or solution. The oil-resistant agent in the present disclosure is water-dispersible type and may contain at least water. The oil-resistant agent can be used as a treatment liquid, for example, in combination with a dispersion medium.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include compounds having at least one hydroxyl group (for example, polyols such as an alcohol and a glycol-based solvent, an ether (for example, a monoether) of polyol, and the like). These may be used singly or in combination of two or more thereof.

### [Amount]

The amount of the liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight, or less than 10 parts by weight, based on 1 part by weight of the hydrocarbon-containing polymer (1).

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less, based on 1 part by weight of the hydrocarbon-containing polymer (1).

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and may be 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less, based on 1 part by weight of the hydrocarbon-containing polymer (1).

### {Silicone}

The oil-resistance agent in the present disclosure may include silicone (polyorganosiloxane). Containing the silicone enables providing favorable texture and durability in addition to favorable liquid-repellency.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight-average molecular weight of the silicone may be 1,000 or more, 10,000 or more, or 50,000 or more, and may be 500,000 or less, 2,500,000 or less, 100,000 or less, or 50,000 or less.

### [Amount]

The amount of silicone may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, based on 100 parts by weight of the hydrocarbon-containing polymer (1).

### {Wax}

The oil-resistant agent in the present disclosure may include wax. Containing the wax can impart favorable liquid-repellency to a substrate.

Examples of the wax include paraffin wax, microcrystalline wax, Fischer-Tropsch wax, polyolefin wax (for example, polyethylene wax and polypropylene wax), oxidized polyolefin wax, silicone wax, animal and vegetable wax, and mineral wax. The paraffin wax is preferred. Specific examples of compounds constituting the wax include normal alkanes (for example, tricosane, tetracosane, pentacosane, hexacosane, heptacosane, octacosane, nonacosane, triacontane, hentriacontane, dotriacontane, tritriacontane, tetratriacontane, pentatriacontane, and hexatriacontane), normal alkenes (for example, 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, and hexatriacontane). The number of carbon atom in the compound constituting the wax is preferably 20 to 60, for example 25 to 45. A molecular weight of the wax may be 200 to 2,000, for example, 250 to 1,500 or 300 to 1,000. These may be used singly or in combination of two or more thereof.

The melting point of the wax may be 50°C or higher, 55°C or higher, 60°C or higher, 65°C or higher, or 70°C or higher, and is preferably 55°C or higher and more preferably 60°C or higher, and may be 200°C or lower, 150°C or lower, 130°C or lower, 120°C or lower, 110°C or lower, 100°C or lower, 80°C or lower, or 50°C or lower, and is preferably 120°C or lower. The melting point of the wax is measured in accordance with JIS K 2235-1991.

### [Amount]

The amount of the wax is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less, based on 100 parts by weight of the hydrocarbon-containing polymer (1).

### {Organic Acid}

The oil-resistance agent of the present disclosure may include an organic acid. The organic acid is different form the polyhydric carboxylic acid (3) described above, and any known organic acid can be used. Examples of the organic acid preferably include, for example, a carboxylic acid, a sulfonic acid, and a sulfinic acid, with the carboxylic acid being particularly preferred. The carboxylic acid may be a monocarboxylic acid. Examples of the carboxylic acid include formic acid, acetic acid, propionic acid, butyric acid, and the like, and it is for example, acetic acid. In the present disclosure, the organic acid may be used single or two or more thereof may be combined for use, and for example, formic acid and acetic acid may be combined for use. Containing the polyhydric carboxylic acid (3) and the organic acid (in particular carboxylic acid), enables inhibition of foaming upon treatment of the oil-resistant agent.

### [Amount]

The amount of the organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, based on 100 parts by weight of the hydrocarbon-containing polymer (1). The amounts of the organic acid and/or polycarboxylic acid may be adjusted so that the pH of the oil-resistant agent (treatment liquid) is 1 to 10, 3 to 10, for example 5 to 9, particularly 6 to 8. The oil-resistance agent may be acidic (the pH may be 7 or lower (less than 7), 6.5 or lower, 6 or lower, 5 or lower, 4 or lower, 3.5 or lower, 3 or lower, 2.5 or lower, 2 or lower, and may be 0.5 or higher, 1 or higher, 1.5 or higher or 2.0 or higher.).

### [Curing Agent]

The oil-resistance agent of the present disclosure may include a curing agent (active hydrogen-reactive compound or active hydrogen-containing compound).

The curing agent (cross-linking agent) in the oil-resistant agent can effectively cure the hydrocarbon-containing polymer (1). The curing agent may be an active hydrogen-reactive compound or an active hydrogen-containing compound that reacts with the active hydrogen or active hydrogen-reactive group of the hydrocarbon-containing polymer (1). Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. A blocked polyisocyanate compound is preferably used because it is relatively stable even in solution and can be used in the same solution as that used for the oil-resistant agent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### [Amount]

The amount of the curing agent may be 0.1 parts by weight or more, 1 part by weight or more, 3 parts by weight or more, 5 parts by weight or more, 10 parts by weight or more, 15 parts by weight parts or more, or 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less, based on 100 parts by weight of the hydrocarbon-containing polymer (1).

### {Other Component}

The oil-resistant agent may include other components in addition to the aforementioned components. Examples of the other components include, for example, polysaccharides, a paper strengthening agent, an agglomerating agent, a yield improver, a coagulant, a binder resin, an anti-slip agent, a sizing agent, a paper strengthening agent, a filler, an antistatic agent, an antisceptic agent, an ultraviolet absorber, an antibacterial agent, a deodorant, and a fragrance. These may be used singly or in combination of two or more thereof.

In addition to the above components, as other components, other water-repellent and/or oil-repellent, water-resistant and/or oil-resistant agents, a dispersant, a texture modifier, a softening agent, a flame retarder, a coating material fixative, a wrinkle-resistant agent, a drying rate adjuster, a cross-linking agent, a film formation agent, a compatibilizer, an antifreezing agent, a viscosity adjuster, a ultraviolet absorber, an antioxidant, a pH adjuster, an insect repellent, a penetrant, an antifoaming agent, an anti-shrinkage agent, a laundry wrinkle-resistant agent, a shape retention agent, a drape retention agent, an ironing improving agent, a brightening agent, a whitening agent, fabric softening clay, an migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (Ichimaru Falcos Co., Ltd.)), an antifouling agent (for example, a nonionic polymer compound composed of an alkylene terephthalate and/or an alkylene isophthalate units and a polyoxyalkylene unit (for example, FR627 manufactured by GOO Chemical Co., Ltd.), SRC-1 manufactured by Clariant (Japan), K. K.), and the like, can be compounded. These may be used singly or in combination of two or more thereof.

### [Paper Strengthening Improver, Agglomerating agent, Yield Improver or Coagulant]

Examples of the paper strengthening agent, agglomerating agent, yield improver, coagulant include a styrenic polymer (styrene/maleic acid polymer, styrene/acrylic acid-based polymer), a urea-formaldehyde polymer, a polyethyleneimine, a melamine-formaldehyde polymer, a polyamideamine-epichlorohydrin polymer, a polyacrylamide-based polymer, a polyamine-based polymer, a polydiallyldimethylammonium chloride, an alkylamine • epichlorohydrin condensate, a condensate of an alkylene dichloride and a polyalkylene polyamine, a dicyandiamide • formalin condensate, a dimethyldiallylammonium chloride polymer, an olefin/maleic anhydride polymer, and the like.

### [Sizing Agent]

Examples of the sizing agents include cellulose-reactive sizing agents such as a rosin-based sizing agent such as rosin-based soap, rosin-based emulsions/dispersions, cellulose-reactive sizing agents such as emulsions/dispersions of acid anhydrides such as alkyl and alkenyl succinic anhydrides (ASA), alkenyl and alkyl ketene dimers (AKD) and multimers, and anionic, cationic and amphoteric polymers of ethylenically unsaturated monomers, such as a copolymer of styrene and acrylate.

### [Antistatic Agent]

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. For example, an ion conductive polymer obtained by polymerizing or copolymerizing a monomer having an ion conductive group of the cationic, anionic, or amphoteric antistatic agent, may be used. These may be used singly or in combination of two or more thereof.

### [Antiseptic Agent]

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol.

### [Ultraviolet Absorber]

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### [Antibacterial Agent]

The antibacterial agent is a component that exhibits the effect of inhibiting bacteria from growing on fibers and further exhibits the effect of inhibiting generation of unpleasant odors derived from decomposition products of microorganisms. Examples of the antibacterial agents include, for example, cationic antibacterial agents such as a quaternary ammonium salt, bis-(2-pyridylthio-1-oxide) zinc, a polyhexamethylene biguanidine hydrochloride salt, 8-oxyquinoline, and a polylysine.

### [Deodorant]

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### [Amount]

Each amount or the total amount of other components may be 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, and may be 1,000 parts by weight or less, 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, 5 parts by weight or less, based on 100 parts by weight of the hydrocarbon-containing polymer (1).

### <Production Method of Treated Textile Product or Paper Product>

The method for producing a product treated with the oil-resistant agent in the present disclosure includes a treatment step of treating a substrate with the oil-resistant agent described above.

The "treatment" refers to applying the oil-resistance agent to a substrate by dipping, spraying, coating, or the like. The treatment allows the hydrocarbon-containing polymer (1), which is an active ingredient of the oil-resistant agent to adhere to an inside and/or a surface of the substrate. Herein, the adhesion may be physical adhesion or chemical adhesion, and for example, the hydrocarbon-containing polymer (1) may be physically or chemically modified by reaction with a hydroxyl group of a substrate (a fiber, paper, glass, and the like).

### [Substrate]

A substrate treated with the oil-resistant agent in the present disclosure is not limited, but is suitably a textile product or a paper product and in particular a paper product.

The oil-resistant agent in the present disclosure imparts liquid-repellency to the substrate (for example, a fiber substrate and paper substrate), and can function as at least one selected from the group consisting of a water-repellent agent, an oil-repellent agent, an oil-resistant agent, and a water-resistant agent. The substrate treated with the oil-resistant agent in the present disclosure is, for example, oil-resistant paper or water-resistant paper.

Examples of the substrate for textile products include animal and vegetable natural fibers such as cotton, linen, wool, and silk, synthetic fibers such as a polyamide, a polyester, a polyvinyl alcohol, a polyacrylonitrile, a polyvinyl chloride, and a polypropylene, and semi-synthetic fibers such as rayon and acetate, inorganic fibers such as a glass fiber, a carbon fiber, and an asbestos fiber, or blended fibers thereof. The textile products include a woven fabric, a knitted fabric, a nonwoven fabric, fabric in the form of clothing (for example, water-repellent garments, for example, a raincoat) and carpets, and a fiber, yarn and intermediate textile product (for example, a sliver or a crude yarn) in a state of before being formed into fabric, may undergo treatment.

Examples of the substrate for paper products include, for example, bleached or unbleached chemical pulp such as kraft pulp or sulfite pulp, bleached or unbleached high-yield pulp such as groundwood pulp, mechanical pulp, or thermomechanical pulp, paper made from wastepaper pulp such as wastepaper of newspapers, magazines, and cardboard, or deinked wastepaper, a paper substrate including a plurality of materials (for example, a mixed paper substrate composed of pulp fibers and synthetic fibers), a container made of paper, a formed product made of paper, and the like. Specific examples of the paper products include a food packaging material, release paper, release paper, a food container, a gypsum liner board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper, molded paper (mold container), and the like, and suitable examples thereof include the food packaging material and the food container.

A substrate to be treated with the oil-resistant agent of the present disclosure is not limited to textile products or paper products, and examples thereof can also include stone, a filter (for example, an electrostatic filter), a dust-protective mask, fuel cell parts (for example, a gas diffusion electrode and a gas diffusion support), glass, wood, leather, fur, asbestos, brick, cement, metal and oxide, a ceramic product, a plastic, a painted surface, a plaster, and the like.

When the substrate is glass, a glass product to be produced may be an optical member. A certain layer (or film), such as a hard coat layer or an antireflection layer, may be formed on the surface (outermost layer) of a glass substrate. The antireflection layer may be any of a single-layer antireflection layer and a multi-layer antireflection layer. Examples of inorganic substances that can be used in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more kinds thereof may be used in combination (for example, as a mixture). In the case of a multi-layer antireflection layer, it is preferable to use SiO₂ and/or SiO for the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

### [Treatment Method]

The oil-resistant agent of the present disclosure can be applied to a substrate as a treatment agent (in particular a surface-treating agent) by a conventionally known method. The treatment method may be a method for dispersing the oil-resistant agent in the present disclosure in an organic solvent or water, if necessary, to dilute it and allowing it to adhere to an inside of a substrate and/or a surface thereof by a known method such as dip coating, spray coating, and foam coating. After drying, a textile product to which a solid component of the oil-resistant agent has been adhered, is obtained. If necessary, the repellent of the present disclosure may be applied in combination of a suitable cross-linking agent, and curing may be carried out. If necessary, the oil-resistant agent of the present disclosure can be further combined for use with various additives such as a water-repellent and/or oil-repellent, an anti-slip agent, an antistatic agent, a texture modifier, a softening agent, an antibacterial agent, a flame retarder, a coating material fixative, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent. Examples of the various additives may be the same as those explained in the section "Other Component" described above. A concentration of the oil-resistant agent in a treatment agent brought into contact with a substrate may be appropriately changed depending on its use, and may be 0.01 to 10% by weight, for example 0.05 to 5% by weight.

The oil-resistant agent can be applied to a substrate by any of methods known for treating a substrate with liquid. The substrate may be immersed in the oil-resistant agent, or solution may be adhered or sprayed onto the substrate. The treated substrate is preferably dried and cured by heating in order to develop liquid-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes. When the textile product is paper, the paper may undergo coating, or solution may be adhered or sprayed onto the paper, or the solution may be mixed with pulp slurry before papermaking to undergo treatment. The treatment may be external addition treatment or internal addition treatment. Alternatively, the oil-resistant agent may be applied to a textile product by a cleaning method, and for example, it may be applied to a textile product in, for example, washing application or a dry cleaning method.

### [Treatment of Paper Product]

Examples of paper substrates include paper, a container made of paper, and a formed product made of paper (for example, a pulp mold). The hydrocarbon polymer (1) of the present disclosure satisfactorily adheres to a paper substrate.

The paper can be produced by a conventionally known papermaking method. An internal addition treatment method in which the oil-resistant agent is added to pulp slurry before papermaking, or an external addition treatment method in which the oil-resistant agent is applied to paper after papermaking, can be employed. A treatment method of the oil-resistant agent in the present disclosure is preferably the external addition treatment method.

A size press used in an external addition treatment method, can be divided into the following types depending on a coating method.

One coating method involves supplying coating liquid (size liquid) to a nip portion formed by passing paper between two rubber rolls, creating a pool of coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of oil-resistant layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

The present disclosure can be used, for example, in gypsum liner board base paper, coated base paper, medium-quality paper, a general liner and core, neutral pure white roll paper, a neutral liner, a rust-proof liner, and metal pasted paper, and kraft paper. The present disclosure can also be used, for example, in neutral printing writing paper, neutral coated base paper, neutral PPC paper, neutral thermal paper, neutral pressure-sensitive base paper, neutral inkjet paper and neutral information paper.

As pulp raw materials, any of bleached or unbleached chemical pulp such as kraft pulp or sulfite pulp; bleached or unbleached high-yield pulp such as groundwood pulp, mechanical pulp, or thermomechanical pulp; and
wastepaper pulp such as wastepaper of newspapers, magazines, and cardboard, or deinked wastepaper, can be used. Moreover, a blend of the aforementioned pulp raw material and a synthetic fibers such as asbestos, a polyamide, a polyimide, a polyester, a polyolefin, or a polyvinyl alcohol, can also be used.

A sizing agent can be added to improve water resistance of paper. Examples of the sizing agent are a cationic sizing agent, an anionic sizing agent, and a rosin-based sizing agent (for example, an acidic rosin-based sizing agent and a neutral rosin-based sizing agent). The amount of sizing agent may be 0.01 to 5% by weight relative to pulp.

For paper, as chemicals for papermaking used to such an extent that they are usually used, if necessary, paper strengthening agents such as starch, modified starch, carboxymethyl cellulose, and a polyamide polyamine-epichlorohydrin resin, and additives used in production of paper, such as an agglomerating agent, a fixing agent, a yield improver, a dye, a fluorescent dye, a slime control agent, and an antifoaming agent, can be used. Starch and/or modified starch are preferably used. If necessary, paper can be coated with the oil-resistant agent together with starch, a polyvinyl alcohol, a dye, a coating color, an anti-slip agent, or the like, by a size press, a gate roll coater, a bill blade coater, a calender, or the like.

In external addition, the amount of hydrocarbon-containing polymer (1) contained in an oil-resistant layer is preferably 0.01 to 2.0 g/m² and particularly 0.1 to 1.0 g/m². The oil-resistant layer is preferably formed of the oil-resistant agent and starch and/or modified starch. The solid content of an oil-resistant agent for paper in the oil-resistant layer is preferably 2 g/m² or less.

In internal addition, the oil-resistant agent is preferably mixed with pulp so that the amount of the oil-resistant agent is 0.01 to 50 parts by weight or 0.01 to 30 parts by weight, for example 0.01 to 10 parts by weight and particularly 0.2 to 5.0 parts by weight, based on 100 parts by weight of pulp that forms paper.

In external addition, even when employing a so-called pound type two-roll size press treatment in which a treatment liquid is stored between rolls, and base paper is passed through the treatment liquid between the rolls at an arbitrary roll speed and nip pressure, oil-repellency can be imparted to paper.

In the present disclosure, as a method for arranging a coating layer (oil-resistant layer), coaters such as a size press coater, a film transfer coater, a gate roll coater, a rod and blade metalling coater, an air knife coater, a roll coater, a bar coater, a blade coater, and a gravure coater, an impregnation apparatus, various printing machines, or the like can be used, but not limited thereto.

In external addition treatment, a paper substrate may contain additives such as a sizing agent, a paper strengthening agent, an agglomerating agent, or yield improver or a coagulant. The additives may be nonionic, cationic, anionic or amphoteric. An ionic charge density of the additive may be -10,000 to 10,000 µeq/g, preferably -4,000 to 8,000 µeq/g, and more preferably - 1,000 to 7,000 µeq/g. The additive (solid content or active ingredient) such as a sizing agent, a paper strengthening agent, an agglomerating agent, a yield improver, or a coagulant can be generally used in an amount of 0.1 to 10% by weight (for example, 0.2 to 5.0% by weight) relative to pulp. In the case of a paper substrate including a cationic additive (for example, a sizing agent, a paper strengthening agent, an agglomerating agent, a yield improver, or a coagulant), the oil-resistant agent may be anionic, and in the case of a paper substrate including an anionic additive, the oil-resistant agent may be cationic, but not limited thereto.

In internal addition treatment, pulp slurry having a pulp concentration of 0.5 to 5.0% by weight (for example, 2.5 to 4.0% by weight) preferably undergo papermaking. The pulp slurry can be added with an additive (for example, a sizing agent, a paper strengthening agent, an agglomerating agent, a yield improver, or a coagulant) and the hydrocarbon-containing polymer (1). Since pulp is generally anionic, at least one of the additive and the hydrocarbon-containing polymer (1) is preferably cationic or amphoteric so that the additive and the hydrocarbon-containing polymer (1) are well fixed on paper. A combination of the additive being cationic or amphoteric and the hydrocarbon-containing polymer (1) being anionic; a combination of the additive being anionic and the hydrocarbon-containing polymer (1) being cationic or amphoteric; and a combination of the additive and the hydrocarbon-containing polymer (1) being cationic or amphoteric are preferably employed. Paper is preferably made with an ionic charge density of an additive constituting a sizing agent, a paper strengthening agent, an agglomerating agent, a yield improver, a coagulant, or the like of -1,000 to 7,000 µeq/g, and paper is further preferably made with the ionic charge density of 100 to 1,000 µeq/g (for example, 330 µeq/g, 420 µeq/g, or 680 µeq/g).

Examples of the additive (for example, a sizing agent, a paper strengthening agent, an agglomerating agent, a yield improver, or a coagulant) include an alkyl ketene dimer, an alkenyl succinic anhydride, a styrenic polymer (styrene/maleic acid polymer, styrene/acrylic acid-based polymer), a urea-formaldehyde polymer, a polyethyleneimine, a melamine-formaldehyde polymer, a polyamideamine-epichlorohydrin polymer, a polyacrylamide-based polymer, a polyamine-based polymer, a polydiallyldimethylammonium chloride, an alkylamine • epichlorohydrin condensate, a condensate of an alkylene dichloride and a polyalkylene polyamine, a dicyandiamide • formalin condensate, a dimethyldiallylammonium chloride polymer, and an olefin/maleic anhydride polymer.

### [Pretreatment of Textile Product]

The textile product may be pretreated before being treated with the oil-resistant agent of the present disclosure. Pretreatment of the textile product enables imparting excellent fastness to the textile product after treated with the oil-resistant agent.

Examples of pretreatment of textile products include cationization treatments by reaction with reactive quaternary ammonium salts or the like, anionization treatments such as sulfonation, carboxylation and phosphorylation, acetylation treatment after anionization treatment, benzoylation treatment, carboxymethylation treatment, grafting treatment, tannin acid treatment, and polymer coating treatment.

The method for pretreating the textile product is not limited, and the textile product can be pretreated by any of conventionally known methods. The method for pretreating the textile product may be a method involving dispersing pretreatment liquid in an organic solvent or water, if necessary, to dilute the pretreatment liquid and adhering it to an inside of the textile product or on a surface thereof and drying the liquid by a known method such as dip coating, spray coating, and foam coating. The pH, temperature, etc. of the pretreatment liquid may be adjusted according to an extent of treatment desired. As an example of the method for pretreating a textile product, a method for pretreating the textile product with a hydrocarbon-based water-repellent agent will be described in detail.

The pretreatment method of a textile product may involve a step of imparting a fiber with one or more functional groups (hereinafter sometimes referred to as "specific functional groups") selected from the group consisting of the monovalent group represented by -SO₃M¹ wherein in formula, M¹ represents a monovalent cation, the monovalent group represented by -COOM² wherein in formula, M² represents a monovalent cation, and the monovalent group represented by -O-P(O)(OX¹)(OX²) wherein in formula, X¹ and X² each independently represent a hydrogen atom or an alkyl group having 1 to 22 carbon atoms.

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

Fibers containing the aforementioned specific functional groups (hereinafter, also referred to as "functional group-containing fibers") can be prepared, for example, by the following methods.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is provided in which the above specific functional group has been directly introduced into the material forming the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not particularly limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. A form of the fiber material may be any form such as a fiber (tow, sliver, etc.), a yarn, a knitted fabric (including an interknitted fabric), a woven fabric (including an interwoven fabric), or a nonwoven fabric.

In the present embodiment, from the viewpoint of improving water-repellency of the obtained textile product, a fiber material containing a polyamide and a polyester as raw materials, is preferably used, and in particular, nylon such as nylon 6, or nylon 6,6, a polyester such as a polyethylene terephthalate (PET), a polytrimethyl terephthalate, or polylactic acid, and blended fibers containing these, are preferably used.

A phenolic polymer can be used as the compound having -SO₃M¹ described above. Examples of such a phenolic polymer include those containing at least one compound represented by the following general formula: 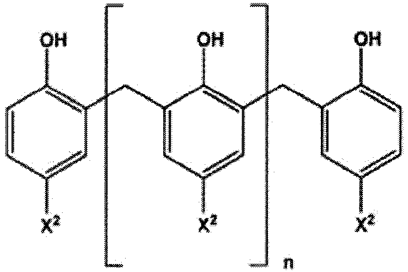 [wherein X² represents -SO₃M³, wherein M³ represents a monovalent cation, or a group represented by the following general formula, and n is an integer of 20 to 3,000.] 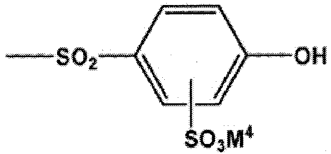 [wherein M⁴ represents a monovalent cation.].

Examples of M³ includes H, K, Na or an ammonium ion that may have a substituent.

Examples of M⁴ includes H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may be added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, an acrylamide, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, propyl methacrylate, and the like. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, lithium, and the like, and examples of the amine-based compound include ammonia, monoethanolamine, diethanolamine, triethanolamine, and the like.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available products such as "Neocrystal 770" (trade name, manufactured by NICCA CHEMICAL CO., LTD.) and "Ceropol PC-300" (trade name, manufactured by Sanyo Chemical Industries, Ltd.) can be used.

Examples of the compound having -O-P(O)(OX¹)(OX²) as described above include phosphoric acid ester compounds represented by the following general formula: 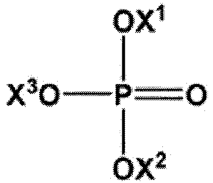 [wherein X¹ or X² is the same as defined above, and X³ represents an alkyl group having 1 to 22 carbon atoms.]

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specified functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of compound having the above specified functional group adhered is 1.0 to 7.0 parts by weight relative to 100 parts by weight of a fiber material. Within this range, both durable water-repellency and texture can be achieved at a high level.

The pH of the pretreatment liquid is preferably adjusted to 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salts that can be used include, for example, sodium chloride,
sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The resulting functional group-containing fiber is preferably fully dried prior to contact with a hydrocarbon-based water-repellent agent.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of -100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

Embodiments have been described above, but it will be understood that various modifications can be made to embodiments and details without departing from the spirit and the scope of the claims.

Examples

The present disclosure will be described in more detail below by way to Examples, but the present disclosure is not limited to these Examples. In the following, a part, percentage or ratio refers to a part by weight, percentage by weight or ratio by weight, unless otherwise specified.

### <Test Method>

The test methods carried out are as follows.

### [Treatment Liquid Viscosity]

The viscosity (cps) was measured using a rotational viscometer (B type) reading resistance (viscous resistance) as a rotational torque of fluid or the like, which a rotating body receives from the liquid.

### [KIT Test]

The oil-resistance (KIT method) was measured according to TAPPI T-559cm-02. A KIT test solution is a test solution in which castor oil, toluene, and heptane were mixed in the ratio shown in the table below. One drop of the test liquid shown in the table below was placed on a piece of paper, and the state of oil penetration was observed after 15 seconds. The highest score of oil resistance given by the KIT test liquid that did not penetrate into the paper was defined as oil resistance. The greater the score of the KIT test liquid, the higher the oil resistance.

### Mixing ratio (vol%)

| Score of oil resistance (KIT test liquid) | Castor oil | Toluene | Heptane |
|---|---|---|---|
| 1 | 100 | 0 | 0 |
| 2 | 90 | 5 | 5 |
| 3 | 80 | 10 | 10 |
| 4 | 70 | 15 | 15 |
| 5 | 60 | 20 | 20 |
| 6 | 50 | 25 | 25 |
| 7 | 40 | 30 | 30 |
| 8 | 30 | 35 | 35 |
| 9 | 20 | 40 | 40 |
| 10 | 10 | 45 | 45 |
| 11 | 0 | 45 | 55 |
| 12 | 0 | 50 | 50 |

### [Practical Oil-Resistance Test 1]

A small amount of commercially available olive oil was poured onto the obtained oil-resistant paper, and the degree of staining was observed after 7 minutes. The evaluation values were set as follows according to the degree of staining on the backside.
5: 0 to 5%
4: 6 to 20%
3: 21 to 50%
2: 51 to 75%
1: 76 to 100%

### [Practical Oil-Resistance Test 2]

Oil-resistant paper in which a small amount of commercially available olive oil was poured thereon was placed in an oven at 70°C, taken out from the oven after 7 minutes, and the degree of staining was observed. The evaluation values were set in the same manner as in Oil-Resistance Test 1.

### [Practical Oil-Resistance Test 3]

A piece of oil-resistant paper was cut out in dimensions of 9 × 9 cm, and slightly folded along a line connecting the centers of each of the two sides facing each other, and the fold was reinforced with a roll covered with a hard rubber layer (the roll was covered with a hard rubber layer having a diameter of 8 cm and a width of 7 cm and having a thickness of 0.6 cm, and the weight of roll was 2450 ± 110 g. The rate of the roll during folding was 50 to 60 cm/sec.). A first fold was made along a line connecting the centers of each of the two sides facing each other, and on the same side of the paper, a second fold was made along a line connecting the centers of each of the other two sides facing each other, then to complete the folding. The test paper was placed on a base plate and a metal cylinder with an inner diameter of 70 mm was placed on top of the test paper, and they were fixed with a clamp or the like, if necessary. Thereafter, approximately 20 g of corn oil was poured into the cylinder. After 20 minutes from the start of contact between the oil and the test paper, the oil was removed, and a portion of the test paper where the oil continuously permeated to 1 mm or more from the fold was determined to have an oil stain from the fold. When the portion in contact with the oil was counted using a 1 cm square grid, there were 52 grids, and the less the oil is stained, the fewer the number of grids counted. The evaluation values were set as follows.
5: 0 to 10 grids
4: 11 to 15 grids
3: 16 to 20 grids
2: 21 to 30 grids
1: 31 to 52 grids

### [Practical Oil-Resistance Test 4]

Evaluation values were set in the same manner as Practical Oil-Resistance Test 1, except that the degree of staining was observed after 20 minutes.

### [Water-Resistance Cobb Test]

The Cobb value was measured in accordance with JIS P 8140:1998. A paper substrate was placed on a surface of a hard base plate with a smooth finish on one side, and a metal cylinder with an inner diameter of 112.8 mm was fixed on the surface with a clamp. Thereafter, water was poured into the cylinder so that the water depth within the cylinder was 10 mm. The weight of water absorbed in 1 minute from the start of contact between the water and the paper substrate was determined. The obtained value was converted into a weight per square meter (g/m²), and the water-resistance Cobb value was determined.

### [Air Permeance Value]

Air permeance was measured in accordance with JISP8117 (2009) using a vent hole with 28.6 ± 0.1 mm in diameter.

### <Synthesis Example>

### [Synthesis Example 1]

A reactor with a volume of 500 ml equipped with a stirring apparatus, a thermometer, a reflux condenser, a dropping funnel, a nitrogen inlet, and a heating apparatus was prepared, and added with 100 parts of methyl ethyl ketone (MEK) as a solvent. Subsequently, under stirring, 78 parts of stearamide ethyl acrylate (C18AmEA, melting point: 70°C), 16 parts of hydroxybutyl acrylate (HBA, Tg: -40°C), and 6 parts of dimethylaminoethyl methacrylate (DM), the total of which was 100 parts, and 1.2 parts of perbutyl PV (PV) as an initiator, were added in this order, and the mixture was mixed and stirred for 12 hours under a nitrogen atmosphere at 65 to 80°C to carry out copolymerization. The solid content concentration of the obtained copolymer-containing solution was 50% by weight. The molecular weight of the obtained copolymer was analyzed by gel permeation chromatography, and the mass-average molecular weight in terms of polystyrene was found to be 230,000. As a post-treatment, to 50 g of the obtained copolymer solution was added 142 g of a 0.4% acetic acid aqueous solution followed by dispersion thereof, and then MEK was distilled off under heating and reduced pressure using an evaporator to obtain a milky white copolymerized water dispersion (volatile organic solvent content: 1% by weight or less). The water dispersion was added with ion-exchanged water to obtain a water dispersion with a solid content concentration of 15% by weight. The melting point of this copolymer was 66°C.

### [Synthesis Example 2]

A milky white copolymerized water dispersion (volatile organic solvent content: 1% by weight or less) was obtained in the same manner as in the Synthesis Example 1 except that, 75 parts of stearyl acrylate (StA, melting point: 30°C) and 19 parts of hydroxybutyl acrylate (HBA, Tg: -40°C) were used in place of stearamide ethyl acrylate (C18AmEA, melting point: 70°C). Ion-exchanged water was added to obtain a water dispersion with a solid content concentration of 15% by weight. The melting point of this copolymer was 46°C.

### <Examples and Comparative Examples>

### [Example 1]

A paper substrate composed of mixed pulp of LBKP (= broad leaf tree bleached kraft pulp) and NBKP (= needle leaf tree bleached kraft pulp) with a basis weight of 48 g/m², paper density of 0.8 g/cm³, air permeance of 230 seconds, and the Cobb value of 45 g /m², was used as base paper.

The oil-resistance of this base paper demonstrated the KIT value of 0 and the value of 1 in all practical oil tests 1, 2, and 3.

Using the water dispersion of the copolymer obtained in Synthesis Example 1 as an oil-resistant agent, oil-resistant paper (processed paper) was obtained according to the following prescription.

To the water dispersion of the copolymer obtained in Synthesis Example 1 were added water, starch, and citric acid, and treatment liquid was prepared so that the solid content concentrations of the copolymer, starch, and citric acid were 1.4% by weight, 14% by weight, and 3% by weight, respectively. The pH of the treatment liquid was 2.0. A paper substrate was immersed in the treatment liquid at about 50°C, squeezed with a roll, and then dried with a drum dryer to obtain oil-resistant paper. Starch that was hydroxyethylated modified starch (the viscosity in a concentration of 10% by weight at 50°C: approximately 11 cps) was used. The dry coating mass of the obtained oil-resistant paper was 7.5 g/m². The results of the KIT value, practical oil tests 1, 2, and 3, and air permeance values are shown in Table 1.

### [Example 2]

The same treatment as in Example 1 was performed except that the starch in the treatment liquid was used at a concentration of 12% by weight and the citric acid was used at a concentration of 5% by weight. The dry coating mass was 7.6 g/m². The pH of the treatment liquid was 1.8. The results of the KIT value, practical oil tests 1, 2, and 3, and air permeance values are shown in Table 1.

### [Example 3]

The same treatment as in Example 1 was performed except that tartaric acid was used at a concentration of 2% by weight in place of the citric acid in Example 1. The dry coating mass was 7.5 g/m². The pH of the treatment liquid was 2.3. The results of the KIT value, practical oil tests 1, 2, and 3, and air permeance values are shown in Table 1.

### [Example 4]

The same treatment as in Example 1 was performed except that a polyvinyl alcohol was used at a concentration of 7% by weight in place of the starch in Example 1. The dry coating mass was 5.4 g/m². The pH of the treatment liquid was 2.1. The results of the KIT value, practical oil tests 1, 2, and 3, and air permeance values are shown in Table 1.

### [Example 5]

The same treatment as in Example 3 was performed except that malic acid was used at a concentration of 0.5% by weight in place of the tartaric acid in Example 3. The dry coating mass was 7.8 g/m². The pH of the treatment liquid was 3.1. The results of the KIT value, practical oil tests 1, 2, and 3, and air permeance values are shown in Table 1.

### [Comparative Example 1]

The same treatment as in Example 1 was performed except that the copolymer of Example 1 and citric acid were not used, and the concentration of starch for use was 17% by weight. The dry coating mass was 7.7 g/m². The results of the KIT value, practical oil tests 1, 2, and 3, and air permeance values are shown in Table 1.

### [Comparative Example 2]

The same treatment as in Example 1 was performed except that the copolymer of Example 1 was not used. The dry coating mass was 7.5 g/m². The results of the KIT value, practical oil tests 1, 2, and 3, and air permeance values are shown in Table 1.

### [Comparative Example 3]

The same treatment as in Example 4 was performed, except that the copolymer of Example 4 and citric acid were not used, and a polyvinyl alcohol was used at a concentration of 10% by weight. The dry coating mass was 5.6 g/m². The results of the KIT value, practical oil tests 1, 2, and 3, and air permeance values are shown in Table 1.

### [Comparative Example 4]

The same treatment as in Example 4 was performed except that the copolymer of Example 4 was not used. The dry coating mass was 4.5 g/m². The results of the KIT value, practical oil tests 1, 2, and 3, and air permeance values are shown in Table 1.

### [Comparative example 5]

The same treatment as in Comparative Example 1 was performed except that hydrophobized starch was used at a concentration of 17% by weight in place of the starch in Comparative Example 1. The dry coating mass was 8.2 g/m². The results of the KIT value, practical oil tests 1, 2, and 3, and air permeance values are shown in Table 1.

### [Comparative Example 6]

The same treatment as in Comparative Example 5 was performed except that citric acid was used at a concentration of 3% by weight in the treatment liquid of Comparative Example 5. The dry coating mass was 9.5 g/m². The results of the KIT value, practical oil tests 1, 2, and 3, and air permeance values are shown in Table 1.

### [Comparative Example 7]

The same treatment as in Comparative Example 1 was performed except that the copolymer was used at a concentration of 1.4% by weight. The dry coating mass was 8.0 g/m². The pH of the treatment liquid was 5.1. The results of the KIT value, practical oil tests 1, 2, and 3, and air permeance values are shown in Table 1.

### [Comparative Example 8]

The same treatment as in Comparative Example 3 was performed except that the copolymer was used at a concentration of 1.4% by weight. The dry coating mass was 7.4 g/m². The results of the KIT value, practical oil tests 1, 2, and 3, and air permeance values are shown in Table 1.

### [Example 6]

The same treatment as in Example 1 was performed except that the water dispersion of the copolymer obtained in Synthesis Example 2 was used as an oil-resistant agent. The pH of the treatment liquid was 2.0. The dry coating mass of the obtained oil-resistant paper was 7.7 g/m². The results of the KIT value, practical oil tests 1, 2, 3, and 4, and air permeance values are shown in Table 1.

### [Comparative Example 9]

The same treatment as in Comparative Example 7 was performed except that the copolymer obtained in Synthesis Example 2 was used at a concentration of 1.4% by weight. The dry coating mass was 7.4 g/m². The pH of the treatment liquid was 5.1. The results of the KIT value, practical oil tests 1, 2, 3, and 4, and air permeance values are shown in Table 1.

**[Table 1]**

| | KIT value | Practical oil-resistance test 1 | Practical oil-resistance test 2 | Practical oil-resistance test 3 | Practical oil-resistance test 4 | Air permeance value |
|---|---|---|---|---|---|---|
| Com.Ex.1 | 1 | 1 | 1 | 1 | | 400 |
| Com.Ex.2 | 1 | 1 | 1 | 1 | | 320 |
| Com.Ex.3 | 0 | 1 | 1 | 1 | | 930 |
| Com.Ex.4 | 0 | 1 | 1 | 1 | | 410 |
| Com.Ex.5 | 3-4 | 3 | 1 | 1 | | 2200 |
| Com.Ex.6 | 1 | 1 | 1 | 1 | | 2500 |
| Com.Ex.7 | 5 | 4-5 | 1 | 2 | | 2000 |
| Com.Ex.8 | 3 | 2-3 | 1 | 1 | | 2270 |
| Ex.1 | 5 | 5 | 3-4 | 5 | | 810 |
| Ex.2 | 5 | 5 | 4 | 5 | | 620 |
| Ex.3 | 6 | 4-5 | 4 | 5 | | 860 |
| Ex.4 | 5 | 4-5 | 1-2 | 3 | | 1130 |
| Ex.5 | 5-6 | 4-5 | 4 | 5 | | 950 |
| Com.Ex.9 | 5 | 4-5 | 1 | 2 | 2 | 1400 |
| Ex.6 | 5 | 5 | 1 | 5 | 4 | 1000 |

## Claims

1. An oil-resistant agent, comprising
(1) a hydrocarbon-containing polymer having a repeating unit derived from a monomer (a) having a hydrocarbon group having 6 or more and 40 or less carbon atoms,
(2) a water-soluble polymer, and
(3) a polyvalent carboxylic acid.

2. The oil-resistant agent according to claim 1, wherein the water-soluble polymer (2) is a polyol.

3. The oil-resistant agent according to claim 1 or 2, wherein the water-soluble polymer (2) is at least one selected from the group consisting of a polysaccharide and a polyvinyl alcohol.

4. The oil-resistant agent according to any one of claims 1 to 3, wherein the polyvalent carboxylic acid has a molecular weight of 1,000 or less.

5. The oil-resistant agent according to any one of claims 1 to 4, wherein the polyvalent carboxylic acid is a hydroxy polyvalent carboxylic acid.

6. The oil-resistant agent according to any one of claims 1 to 5, wherein the polyvalent carboxylic acid is at least one selected from the group consisting of citric acid, malic acid, tartaric acid, and tartronic acid.

7. The oil-resistant agent according to any one of claims 1 to 6, wherein the monomer (a) has a hydrocarbon group having 12 or more and 30 or less carbon atoms.

8. The oil-resistant agent according to any one of claims 1 to 7, wherein the monomer (a) is represented by
formula:
CH₂=C(-X^{a})-C(=O)-Y^{a} (R^{a})ₖ
wherein R^{a} is each independently a hydrocarbon group having 6 to 40 carbon atoms,
X^{a} is a hydrogen atom, a monovalent organic group or a halogen atom,
Y^{a} is a group composed of at least one selected from a divalent to trivalent hydrocarbon group having 1 carbon atom, -C₆H₄-, -O-, - C(=O)-, -S(=O)₂- or -NH-, provided that a hydrocarbon group is excluded, and
k is 1 to 3.

9. The oil-resistant agent according to any one of claims 1 to 8, wherein the monomer (a) comprises a monomer (a2), and
the monomer (a2) is represented by
formula:
CH₂=C(-X^{a2})-C(=O)-Y^{a21}-Z(-Y^{a22}-R^{a2})ₙ
wherein R^{a2} is each independently a hydrocarbon group having 6 to 40 carbon atoms,
X^{a2} is a hydrogen atom, a monovalent organic group or a halogen atom,
Y^{a21} is -O- or -NH-,
Y^{a22} is each independently a group composed of at least one selected from -O-, -C(=O)-, -S(=O)₂-, -NH-, or -CH₂-,
Z is a divalent or trivalent hydrocarbon group having 1 to 5 carbon atoms, and
n is 1 or 2.

10. The oil-resistant agent according to any one of claims 1 to 9, wherein the hydrocarbon-containing polymer (1) comprises a repeating unit derived from
(b) a hydrophilic group-containing monomer, and
the monomer (b) is an oxyalkylene (meth)acrylate represented by formula:
CH₂=CX^{b}C(=O)-Y^{b}-(R^{b}O)ₙ-A^{b}
wherein
X^{b} is a hydrogen atom or a methyl group,
Y^{b} is -O- or -NH-,
R^{d} is each independently an alkylene group having 2 to 6 carbon atoms,
A^{b} is a hydrogen atom, an unsaturated or saturated hydrocarbon group having 1 to 22 carbon atoms, or CH₂=CX^{b}C(=O)-, and
n is an integer of 1 to 90.

11. The oil-resistant agent according to any one of claims 1 to 10, wherein the hydrocarbon-containing polymer (1) comprises
(c) an ion-donating group-containing monomer, and
the monomer (c) comprises an olefinic carbon-carbon double bond and an anionic donor group or a cationic-donor group.

12. A product treated with the oil-resistant agent according to any one of claims 1 to 11.

13. The product according to claim 12, wherein the product is a textile product or a paper product.

14. The product according to claim 12 or 13, wherein the product is oil-resistant paper or water-resistant paper.

15. The product according to any one of claims 12 to 14, wherein the product is a food packaging material or a food container.
